# EUROPEAN PATENT APPLICATION

(11) **EP 1 079 318 A2**
(43) Date of publication of application: **28.02.2001**
(21) Application number: 00306392.2
(22) Date of filing: 27.07.2000
(51) Int. Cl.: G06F 17/60

(54) **Message processing system**

(30) Priority: 20.08.1999 JP 23459399
(71) Applicant: FUJITSU LIMITED, Kawasaki-shi, Kanagawa 211-8588 (JP)
(72) Inventor: Kawamuru, Akira, Nakahara-ku, Kawasaki, Kanagawa 211-8588 (JP); Masuoka, Ryusuke, Nakahara-ku, Kawasaki, Kanagawa 211-8588 (JP); Kitajima, Hironobu, Nakahara-ku, Kawasaki, Kanagawa 211-8588 (JP); Sato, Akira, Nakahara-ku, Kawasaki, Kanagawa 211-8588 (JP)
(74) Representative: Hitching, Peter Matthew

(57) **Abstract**

A message processing system is disclosed in which processing content is input via a user interface (UI). A message processing part (10) obtains service definition information from a service definition storing part (40) storing message-finite state machine linkage information for assigning the finite state machine (100) corresponding to the message and a parameter (43) for controlling the operation of the finite state machine (100), and obtains finite state machine definition information from a finite state machine definition storing part (50) that defines each finite state of the finite state machine, the cooperation relationship, and the transition condition, so as to construct the finite state machine. The finite state machine (100) processes a message content by transition between the states of the start state, message processing start state, message reply wait state, reply processing and end state.

## Description

The present invention relates to a technique of cooperative operation of information processing system constructed on a network system such as the internet and an intranet.

In recent years, the development of computer network systems such as the internet and intranets has been diversified the use form of computers. A network system such as the internet or an intranet is constructed as an open network where computers or local area networks with any platforms can be connected, as long as the common protocol, i.e., the internet protocol is employed. On-line data exchange can be easily performed between the information systems on these networks.

WWW (world wide web) browsers via the networks are wide spread as means for accessing information on the network systems such as the internet or intranets. Using the WWW browsers as the standard interface can provide convenient means for accessing an information processing system that is newly constructed for a wide range of users.

The recent active movement is directed to achieving high efficiency and high performance of conventional business and creation of new business fields by circulating, sharing and combining information or knowledge, which have been distributed and present locally, while maintaining the close relationship with the development and spreading of the internet related technologies. In order to construct information processing systems that circulate, share and combine information or knowledge, it is necessary to connect at least two information processing systems that information or knowledge is on, and to operate the information processing systems in cooperation, when the information or knowledge is electronized. When the information or knowledge is not electronized, it is necessary to electronize it to utilize on an information processing system for cooperative operation.

For constructing the information system that is intended to be operated in cooperation on the networks, it is important to satisfy the following conditions.

A first condition is inheritance and flexibility of the existing assets in information processing system construction. The information processing system to be constructed is required to utilize developing internet related technologies while cooping with significant changes in the situation of the business fields. Therefore, it is desirable to construct a new information processing system by making the most of the existing assets rather than creating a non-flexible system from the beginning, and combining common components that can be used later for other purposes. This makes it possible to shift smoothly from the existing system and to change the information processing system dynamically in response to the changes in the situation.

A second condition is construction of a network system where distribution and multidimension of individual elements are maintained. In general, regarding the cooperative operation between the existing systems constructed on the internet or intranets, the operation policy or the interests of an organization operating information sources or information processing systems that are distributed on the network are different from organization to organization. Furthermore, the cooperative operation itself may have some restrictions regarding the period of time or the contents. Therefore, a desirable operation form of the cooperation between the information systems is not the conventional form where the information sources and the contents thereof are treated as fixed and unified and are controlled collectively, but the form where the information sources and the contents thereof are treated as changeable and multidimensional, while leaving the distributed as they are and maintaining the diversity of the operating organizations and the contents of the individual information sources and information processing systems.

One of the techniques to construct the information processing system that satisfy the above conditions uses the concept of agents as follows. The concept of agents as used herein refers to a program providing functions that are distributed on the network and operate independently, and are used and controlled in unity. Each agent of an agent system operates in cooperation with other agents by exchanging messages with other agents so as to realize the intended information processing as a whole. Moreover, the protocol regarding how to express the content of information or knowledge is determined among agents, and the agents exchange messages according to the protocol, so that they can be combined on a high level of abstractness.

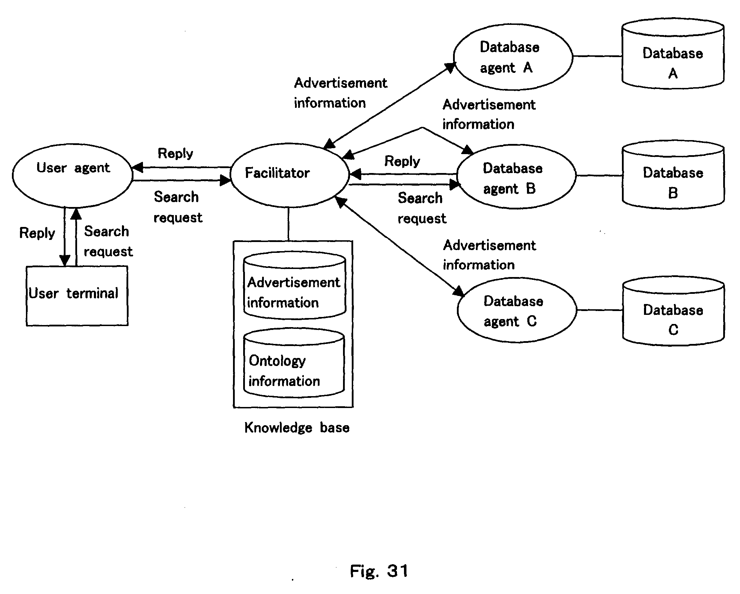

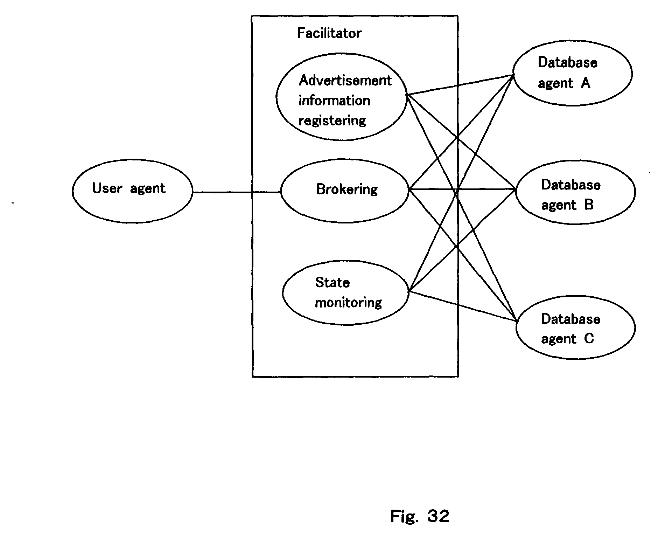

Fig. 31 shows an example of an agent system configuration. This agent system includes three types of agents, i.e., a user agent, database agents, and facilitators. The user agent provides the GUI function of receiving a search request from a user on a WWW browser and the function of transmitting the search request as a message. The database agents provide the function of connecting with information sources such as databases, receiving the message of the search request, and replying to the request with a message of the results of searching the information sources and the function of transmitting an advertising message conveying information on what types of search requests can be received, namely, what services can be received. The facilitators provide the function of facilitating message exchange between the user agent and the database agents. Fig. 32 shows an example of use of the facilitator. The facilitators have the function of registering the advertising message from the database agent in the knowledge base included therein and the brokering function of selecting database agents corresponding to the search request message from the user agent using the advertised information in the knowledge base, transmitting the search request message to the corresponding database agents, and transmitting the integrated results of replies from them to the user agents. In the brokering, the content of the message may be converted with the ontology conversion knowledge in the knowledge base so that they can be processed by the database agent, if necessary. Moreover, the facilitator may have the function of monitoring the states of the database agents, which are used to control transmission of the search request to the database agents.

The following conditions are required to be satisfied in view of implementing the agents, especially agents that perform complicated message exchange such as the facilitators.

First, it is necessary to perform different processing to a received message, depending on the type or the content of the received message.

Secondly, processing for waiting for reply message to a transmitted message is necessary. In particular, in the case of the facilitator, it is necessary to transmit a search request message from the user agent to a plurality of database agents, and therefore, processing for waiting for a plurality of reply messages to these requests is required.

Thirdly, in order to improve the responsibility, it is necessary to consider parallel processing of the search request messages from the user agent, namely, a request for processing for receiving a next search request message or the like, before processing for replying to one search request is completed.

Now, processing for waiting for reply messages will be examined in detail. This processing is not simply processing for waiting for reply messages to be received, but is required to be performed in accordance with time-out or cancel requests. As the processing for waiting for the reply messages, there are the following cases, depending on the setting or the necessity of the user. Reply messages that have been received from the database agents until that point are accumulated and integrated, and then transmitted to the user agent, notifying that the search was successful; or notifying that the search was unsuccessful. Furthermore, it is necessary to perform processing for determining which message waiting for a reply a received reply message corresponds to. In this processing, it is also necessary to take into consideration the case where there is no corresponding message waiting for a reply because of time-out or cancellation when a reply message is received.

The characteristics of the processing for waiting for reply messages from the aspect of how to use the resources required for implementation are as follows. A large number of kinds and a large amount of temporary storage for work such as accumulation of received messages are required by the time when a final reply is. Moreover, in the case where the period until time-out is long, most of the time is spent in waiting for some event, during which no processing is performed.

Here, assuming as follow, problems that might be caused in implementation of processing of a received message or the like will be specifically examined: Agents are implemented as a single process, or a process or a thread is generated for each message received from the user agent, and the process or the thread performs consistent processing until it transmits a reply message corresponding to the received message to the user agent.

In this case, the process or the thread waits for an event for most of the time when it exists, and it occupies a large amount of temporary storage capacity. Therefore, the resources such as the CPU time, the storage capacity or the like are wasted, which is a problem. Furthermore, it is necessary to describe explicitly the codes of a part of the content of the temporary storage to perform back-up periodically for recovery processing at the time of the systemdown of the system. In addition, it is necessary to describe explicitly the codes for periodical monitoring to watch the processing state.

The process or the thread is required to check with an infinite loop periodically whether or not a message is received. When there is a received message, it is necessary to perform different processing depending on the type and the content of the received message. Moreover, it is necessary to check whether or not time-out or cancellation processing is requested at the same timing as the checking of the received message. This processing is required to be changed in accordance with each combination of the states or the like. Therefore, the implementation of the agents is complicated, and it is difficult to change processing of messages or to use these agents in other similar information processing system.

Furthermore, the agent system works in cooperation by exchanging messages between the agents, thereby realizing one information processing. However, other agents operate independently, so that processing flow of processing inside an agent is separated from that of processing for exchanging messages between agents, which is difficult to comprehend.

Therefore, with the foregoing in mind, it is an object of the present invention to provide a message processing system that can reduce the complexity of implementation of an agent system, can flexibly coop with the changes of the message processing content or the like and allows the agents to be used also in an information processing system having other common processing contents.

Furthermore, it is another object of the present invention to provide a message processing system that does not separate a processing flow of processing inside an agent from that of processing for exchanging messages between agents, and makes the processing flows smooth, in the environment where independent agents work in cooperation by exchanging messages.

Furthermore, it is another object of the present invention to provide a message processing system that reduces the amount of storage capacity required in large amount by the reply message wait processing of the agent system, or the like, and reduces waste of resources such as CPU, storage capacity or the like required by the wait state.

In order to achieve the above objects, a message processing system of the present invention, which captures a message running on a network where a plurality of information processing systems are connected, and executes processing corresponding to a content of the message, includes a message-sending and receiving part having a message reception function of receiving a message transmitted via the network and a message transmission function of transmitting a message; and a message processing part including a finite state machine, which is a part for executing a processing content corresponding to a message, for executing processing of the message as transition of finite state, regarding each stage of the processing of the message as a finite state. The finite state machine shifts its state a start state;
a message processing start state in which a request to start is received, a message to be transmitted to another message processing system indicating a content of the request is prepared and transmitted onto the network by the message-sending and receiving part; a message reply wait state including event wait processing for waiting a reply from another message processing system to the message transmitted in the message processing start state, reply reception processing for receiving a reply message to the transmitted message by the message-sending and receiving part, and reply processing for executing processing in accordance with the reply message following a predetermined procedure; and an end state in which the message processing is terminated after the message reply wait state is terminated.

With the above embodiment, procedures for exchange of messages between agents can be sorted out or classified by each flow of a series of procedures to achieve a specific aim and grouped into classes of the finite state machine objects that shift their state in accordance with the process of processing such as message transmission or reception. Thus, the implementation of the message processing can be divided into components. Furthermore, by shifting the state of one finite state machine object in cooperation with a plurality of processes, message processing can be executed in parallel. Furthermore, the process that has completed an operation of state transition can be reused for processing of another totally different finite state machine object. Thus, the system resources can be saved.

It is preferable that the message processing system of the present invention further includes a service definition storing part and a finite state machine definition storing part. The service definition storing part stores a service definition including a message-finite state machine linkage part for assigning the finite state machine for processing of a message in accordance with the message and a parameter for controlling an operation of the finite state machine as elements. The finite state machine definition storing part stores a definition of the finite state machine. The message processing part performs message processing by designating the finite state machine generated by the message-finite state machine linkage information in the service definition storing part, obtaining a finite state machine definition from the finite state machine definition storing part to generate the finite state machine, operating the finite state machine using the control parameter in the service definition, so that the message processing is performed unitedly as a service.

With the above embodiment, the functions provided by an agent can be sorted out or classified by each group that can be operated in unity, and each group can be a component as a class of an object of one service definition. The service definition object can have a method that determines which class of the finite state machine object is assigned for message processing and a parameter that performs control of the operation of the finite state machine at that time as slots.

In the message processing system of the present invention, it is preferable that the message processing part includes a service execution environment managing part for managing a service execution environment, and the service definition storing part further comprises a service managing part for managing service by referring to or changing the service execution environment in the service definition.

With the above embodiment, the service definition object can, if necessary, have a method that manages the service by referring to or operating a service execution environment object or a method that determines whether or not a service for finding a service that is to handle a received message is suitable when a plurality of services are performed by one agent.

According to the message processing system of the present invention, which is a message processing system operated in cooperation by messages, message processing procedures are sorted out or classified by each flow of a series of procedures to achieve a specific aim, and can be grouped into classes of the finite state machine objects that perform state transition in accordance with the process of processing such as message transmission or reception. All the changes of information in the process of the message processing including a wait state can be executed and managed as state transition of the finite state machine. Therefore, a series of message processing procedures can be separated from a process that processes them. Therefore, it is possible to perform the state transition of one finite state machine object in cooperation with a plurality of processes, and to execute a plurality of message processing by a plurality of processes in parallel. In this case, the number of processes can be small. Furthermore, the process that has completed an operation of state transition can be reused for processing of another finite state machine object. Thus, the system resources can be saved. On the other hand, if the same finite state machine can be accessed (operated), it can be described in another message processing system, another computing system, another network, or another language.

Furthermore, according to the message processing system of the present invention, the functions provided by an agent are sorted out or classified by each group that can be operated in unity, and each group is used as a class of an object of one service definition. Thus, the definition of the message processing can be a component, and the service definition object can have a method that determines which class of the finite state machine object is assigned for message processing with respect to a received message and a parameter that performs control of the operation of the finite state machine at that time as slots.

These and other advantages of the present invention will become apparent to those skilled in the art upon reading and understanding the following detailed description with reference to the accompanying figures.
Fig. 1 is a diagram showing the configuration of the outline of a message processing system of Embodiment 1 of the present invention.
Fig. 2 is a diagram showing the configuration of the outline of a first finite state machine of Embodiment 1 of the present invention.
Fig. 3 is a diagram showing the configuration of the outline of a message processing system of Embodiment 2 of the present invention.
Fig. 4 is a diagram showing the outline of the processing flow of the message processing system of Embodiment 2 of the present invention.
Fig. 5 is a diagram showing the configuration of the outline of a message processing system of Embodiment 3 of the present invention.

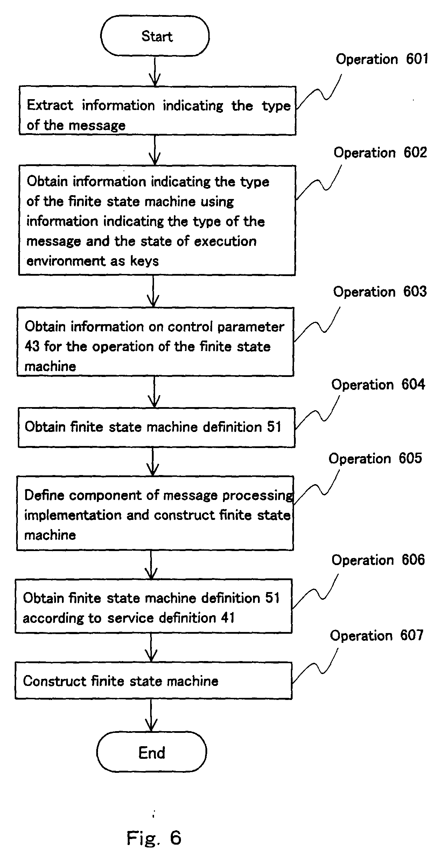

Fig. 6 is a diagram showing the outline of the processing flow of the message processing system of Embodiment 3 of the present invention.
Fig. 7 is a diagram showing the configuration of the outline of a message processing system of Embodiment 4 of the present invention.

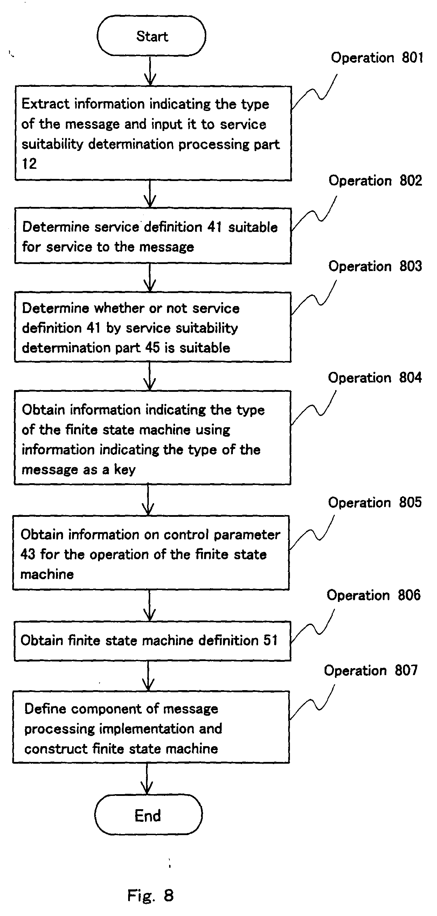

Fig. 8 is a diagram showing the outline of the processing flow of the message processing system of Embodiment 4 of the present invention.
Fig. 9 is a diagram showing the configuration of the outline of a second finite state machine of Embodiment 5 of the present invention.
Fig. 10 is a diagram showing the configuration of the outline of a third finite state machine of Embodiment 5 of the present invention.
Fig. 11 is a diagram showing the configuration of the outline of a fourth finite state machine of Embodiment 5 of the present invention.
Fig. 12 is a diagram showing the configuration of the outline of a fifth finite state machine of Embodiment 5 of the present invention.
Fig. 13 is a diagram showing the configuration of the outline of a sixth finite state machine of Embodiment 5 of the present invention.
Fig. 14 is a diagram showing the configuration of the outline of a seventh finite state machine of Embodiment 5 of the present invention.
Fig. 15 is a diagram showing the configuration of the outline of an eighth finite state machine of Embodiment 5 of the present invention.
Fig. 16 is a diagram showing the configuration of the outline of a ninth finite state machine (a first type) of Embodiment 5 of the present invention.
Fig. 17 is a diagram showing the configuration of the outline of a ninth finite state machine (a second type) of Embodiment 5 of the present invention.
Fig. 18 is a diagram showing the configuration of the outline of a tenth finite state machine of Embodiment 6 of the present invention.
Fig. 19 is a diagram showing the configuration of the outline of an eleventh finite state machine of Embodiment 6 of the present invention.
Fig. 20 is a diagram showing the configuration of the outline of a twelfth finite state machine of Embodiment 6 of the present invention.
Fig. 21 is a diagram showing the configuration of the outline of a thirteenth finite state machine of Embodiment 6 of the present invention.
Fig. 22 is a diagram showing the configuration of the outline of a fourteenth finite state machine of Embodiment 7 of the present invention.
Fig. 23 is a diagram showing the configuration of the outline of a fifteenth finite state machine of Embodiment 7 of the present invention.
Fig. 24 is a diagram showing the configuration of the outline of a sixteenth finite state machine of Embodiment 8 of the present invention.
Fig. 25 is a diagram showing the configuration of the outline of a seventeenth finite state machine of Embodiment 9 of the present invention.
Fig. 26 is a diagram showing the assignment relationship between a first processing process and the finite state machine of Embodiment 10 of the present invention.
Fig. 27 is a diagram showing the assignment relationship between a second processing process and the finite state machine of Embodiment 10 of the present invention.
Fig. 28 is a diagram showing the assignment relationship between a third processing process and the finite state machine of Embodiment 10 of the present invention.
Fig. 29 is a diagram showing the concept of sending and receiving a message whose content is the finite state machine between the message processing systems of Embodiment 11 of the present invention.
Fig. 30 is a diagram showing a recording medium storing a program including processing operations that realize the message processing system of the present invention.
Fig. 31 is a diagram showing an example of a conventional agent system.
Fig. 32 is a diagram showing an example of a use case of a conventional facilitator.

The basic idea of the message processing system of the present invention is as follows: Procedures for exchange of messages between an agent of interest and other agents are sorted out or classified by each flow of a series of procedures for achieving a specific aim, and grouped as a class of a finite state machine object that performs state transition according to the processing stages of sending and receiving messages. In this manner, implementation of message processing can be divided into components. In this case, information used commonly in processing in a plurality of states is stored as a slot of the finite state machine object so that the value is delivered and received.

A method of the finite state objects is prepared individually to perform processing for each of a request for processing of receiving a message(s), a request for time-out processing, a request for cancellation processing. Furthermore, a linking mechanism to find out the finite state object instance to be subjected to processing is prepared for each kind of request of the request for processing of receiving a message(s), the request for time-out processing, the request for cancellation processing. When transmitting a message that requires a reply message, registration is performed in a corresponding linking mechanism, if necessary, and when the registered linkage is not necessary any more, as a result of state transition, it is deleted.

The functions provided by the agent are sorted out or classified by each group operated in unity, and each group can be a component as a class of an object of one service definition. The service definition object can have a method that determines which class of the finite state machine object is assigned for message processing with respect to a received message and a parameter that performs control of the operation of the finite state machine at that time as slots.

With the above-described configuration, the service definition object can, if necessary, have a method that manages the service by referring to or operating a service execution environment object or a method that determines whether or not a service for finding a service that is to handle a received message is suitable when a plurality of services are performed by one agent.

Furthermore, in addition to intra-agent message processing, regarding the message processing between the agents, , implementation of message processing can be divided into components by sorting out or classifying the functions for each flow of a series of procedures for achieving the aim and grouped as a class of the finite state machine object that performs state transition in accordance with the processing stages of transmitting or receiving messages.

Hereinafter, message processing systems of the embodiments of the present invention will be described with reference to the accompanying drawings.

### Embodiment 1

A message processing system of Embodiment 1 includes a message processing part including a finite state machine that executes processing of a message(s) as transition of the state, regarding the processing content corresponding to the message as a state of each processing stage of the message.

The outline of the entire configuration of the message processing system of Embodiment 1 and the outline of the processing flow of this system will be described with reference to the accompanying drawings.

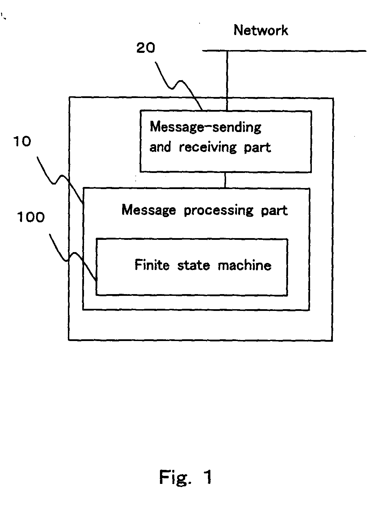

Fig. 1 is a diagram showing the configuration of the outline of the message processing system of Embodiment 1.

In Fig. 1, reference number 10 denotes a message processing part, and reference number 20 denotes a message-sending and receiving part.

The message processing part 10 executes the processing content corresponding to a message, regarding each processing stage of the message as a finite state. Thus, the message processing part 10 includes a finite state machine 100 that groups a series of message processing procedures into classes of the finite state machine objects that shift the state, and is configured as a component of the implementation of the message processing, and executes the processing as transition of the finite state. The finites state and the transition thereof of the virtual finite state machine 100 in the message processing of the message processing system of the present invention have various patterns. The variations of the finite state machine are shown in Embodiment 1 and the subsequent other embodiments.

The message-sending and receiving part 20 is an interface for message transmission and reception via a network, has a message-receiving function for capturing a message transmitted via the network and a message transmitting function for transmitting a message(s), and includes the necessary hardware and driver software.

A user interface (not shown) can be provided as an interface for general users in the case of a message processing system for an agent manager or a user interface (hereinafter, referred to as UI). The user interface includes an input/output apparatus such as a keyboard, a pointing device and a monitor and a control part thereof.

The control unit, memory and other peripherals necessary for driving the computer system are omitted for simplifying the description.

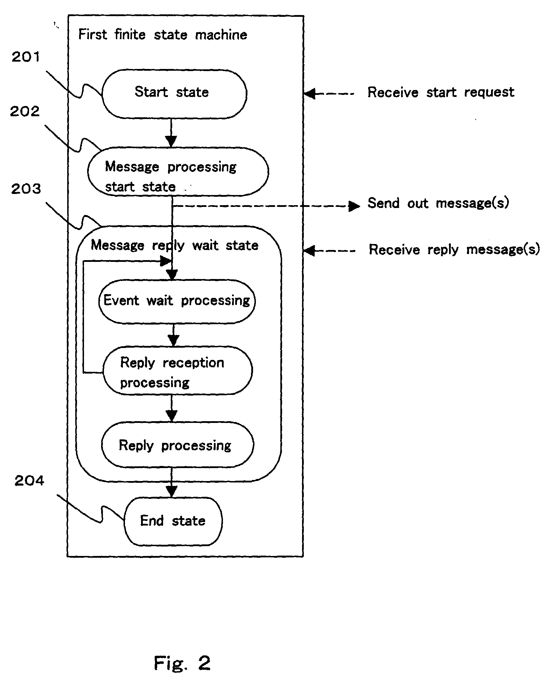

Next, an example of the finite state machine configured virtually in the message processing part 10 of the message processing system of Embodiment 1 will be described. Fig. 2 shows the most basic example of the finite state machine configured in the present invention. As shown in Fig. 2, the finite state machine of this example shifts its state a start state 201, a message processing start state 202, a message reply wait state 203 (including event wait processing, reply reception processing and reply processing) and an end state 204.

The start state 201 is a state immediately after a suitable finite state machine class has been selected and an instance has been generated. When a message indicating a processing content such as search is received, or a request is received from information collection procedures regarding another message processing system with input from a program or a user, the state shifts to the message processing start state 202.

The message processing start state 202 prepares message(s) indicating the request content to be transmitted to another message processing system in response to a request to start. Since cooperative operation between message processing systems is performed with messages, a transmission message that can be interpreted by other message processing systems is generated under the protocol. When a transmission message is generated, the message-sending and receiving part 20 transmits the transmission message onto the network.

In this example, there is no need to take into consideration processing of selecting where to transfer the transmission message. When the transmission message is transmitted onto the network, event wait processing in the message reply wait state 203 is performed.

After transmitting the transmission message, the even wait processing is processing for waiting for the necessary reply message to be received from a predetermined other message processing system. In this example, the reply message wait state remains a wait state until a reply message is received, and there is no need to take into consideration processing for time-out or the like. When a reply message is received, reply reception processing is performed, and then reply processing is performed.

The reply processing is in a state in which a reply message captured by the message-sending and receiving part 20 is received and processing is executed in accordance to the reply message following a processing program. In the case where the reply message is to be transmitted eventually to another message processing system or is used for UI, the reply processing includes processing of adjusting the reply message to a suitable reply form such as a message or images to be presented to the user as a reply. When the reply processing ends, the state shifts to the end state 204.

Furthermore, in the case of the message processing system for UI, when the message processing part 10 obtains a reply to be presented to the user from the finite state machine 100, it presents the reply to the user via the user interface.

As described above, according to the message processing system of Embodiment 1, which acts as an agent system operated in cooperation by the messages distributed on the network, the finite state machine can be virtually constructed, the processing stages of message processing are regarded as states and grouped into classes of the finite state machine objects that perform state transition in accordance with the process of processing such as message transmission or reception, so that the implementation of message processing can be divided into components.

### Embodiment 2

A message processing system of Embodiment 2 includes a message processing part including a finite state machine that executes processing of a message(s) as transition of the state, regarding the processing content corresponding to the message as a state of each processing stage of the message, a service definition storing part in which a service definition is stored, and a finite state machine definition storing part in which definitions of the finite state machine are stored. This system dynamically constructs or changes the finite state machine included in the message processing part in accordance with the message from the input of the user or another message processing system.

The outline of the entire configuration of the message processing system of Embodiment 2 and the outline of the processing flow of this system will be described with reference to the accompanying drawings.

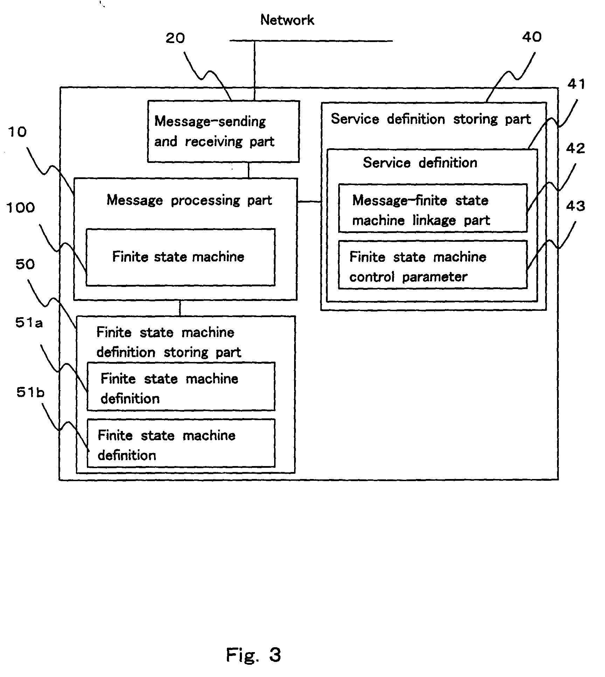

Fig. 3 is a diagram showing the configuration of the outline of the message processing system of Embodiment 2.

In Fig. 3, reference number 10 denotes a message processing part, reference number 20 denotes a message-sending and receiving part, reference number 40 denotes a service definition storing part, and reference number 50 denotes a finite state machine definition storing part.

The message processing part 10 includes a finite state machine 100 and executes processing as transition of the finite state as that in Embodiment 1. The message-sending and receiving 20 is the same as in Embodiment 1, and will not be described further.

The service definition storing part 40 stores a service definition 41. The elements of the service definition 41 are a message-finite state machine linkage information 42 for assigning a finite state machine for performing processing of a received message in accordance with the message, and a parameter 43 for controlling the operation of the finite state machine. It is necessary that the processing content in the message processing system is changed with the instruction content or the request content of the message to meet the instruction or request of the message, and also it is necessary that a finite state machine corresponding to the message is constructed as the finite state machine in the message processing part 10. Therefore, as the service definition 41, the service definition storing part 40 includes the message-finite state machine linkage information 42 for linking a message and a finite state machine for performing processing the message, and a parameter 43 for controlling the operation of the finite state machine.

The finite state machine definition storing part 50 stores finite state machine definitions 51. The finite state machine definition 51 refers to definitions of each state of a virtual finite state machine constructed in the message processing part 10, cooperation relationship of the states, and the condition of transition from one state to another. When the finite state machine to be constructed is designated by the message processing part 10, a virtual finite state machine is constructed in the message processing part 10 based on the finite state machine definition 51 stored in the finite state machine definition storing part 50.

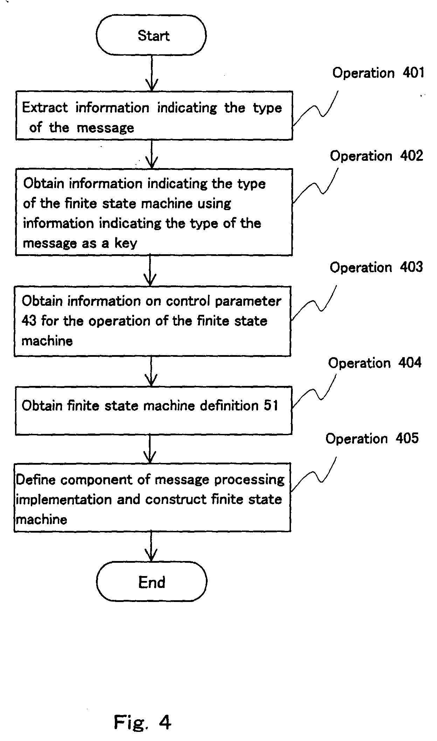

Next, the processing flow of the message processing system having the configuration of Fig. 3 will be described with reference to the flowchart shown in Fig. 4.

In the case of a message processing system for UI, a user inputs a processing content such as search request from a user interface.

The message processing part 10 extracts information indicating the type of a message from the received message, and delivers it to the service definition storing part 40 (Operation 401).

The service definition storing part 40 refers to the message-finite state machine linkage information 42 in the service definition 41 using the information indicating the type of the message as the key to obtain information indicating the type of a corresponding finite state machine based on the information key indicating the type of the message (Operation 402).

The service definition storing part 40 has the control parameter 43 for controlling the operation of each finite state machine, and returns the information indicating the type of the finite state machine and information on the control parameter 43 for controlling the operation of the finite state machine to the message processing 10 (Operation 403).

The message processing part 10 delivers the information indicating the type of the finite state machine to the finite state machine definition storing part 50. The finite state machine definition storing part 50 obtains the finite state machine definition 51 using the delivered information indicating the type of the finite state machine as the key, and returns the finite state machine definition 51 to the message processing part 10 (Operation 404).

The message processing part 10 defines a component of message processing implementation grouped as a class of a finite state machine object based on the obtained finite state machine definition 51, and constructs a finite state machine (Operation 405).

The constructed finite state machine can be, for example the finite state shown in Embodiment 1, or a finite state machine having a transition pattern of other finite states shown in the other embodiments.

The above-described operations 401 to 405 are executed, so that the finite state machine in which each stage of the message processing is regarded as a state can be dynamically constructed or changed in accordance with the message content from the user, the message processing system configuration can become flexible, and the definition of the message processing can become a component.

### Embodiment 3

A message processing system of Embodiment 3 includes a message processing part including a finite state machine that executes processing of a message(s) as transition of the state, regarding the processing content corresponding to the message as a state of each processing stage of the message, a service definition storing part in which a service definition 41 is stored, and a finite state machine definition storing part in which definitions of the finite state machine are stored. The message processing part includes a service execution environment managing part for managing information on service execution environment to be utilized at initialization processing or maintenance processing. The service definition of the service definition storing part further includes a service managing part for managing the service definition at initialization processing, maintenance processing, recovery from failure or the like by referring to or changing the service execution environment of the service execution environment managing part.

The outline of the entire configuration of the message processing system of Embodiment 3 and the outline of the processing flow of this system will be described with reference to the accompanying drawings.

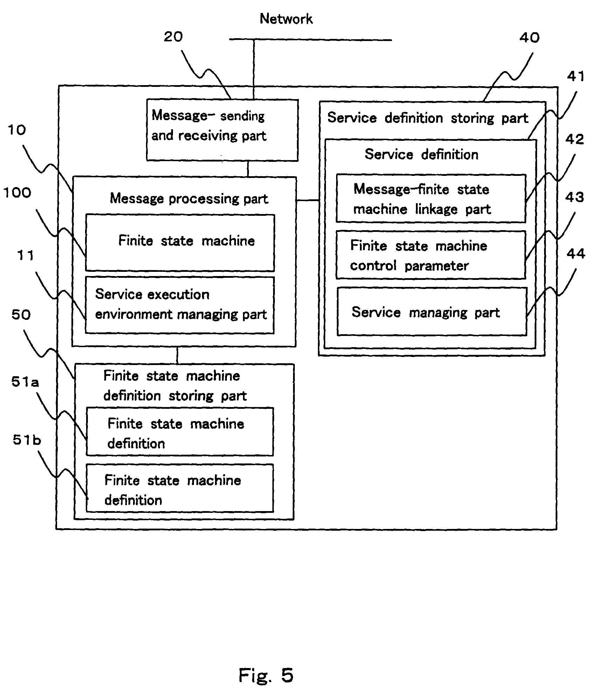

Fig. 5 is a diagram showing the configuration of the outline of the message processing system of Embodiment 3.

In Fig. 5, reference number 10 denotes a message processing part, reference number 20 denotes a message-sending and receiving part, reference number 40 denotes a service definition storing part, and reference number 50 denotes a finite state machine definition storing part.

The message processing part 10 virtually includes a finite state machine 100 and executes processing as transition of the finite state and includes the service execution environment managing part 11. The service execution environment managing part 11 manages state information on service execution environment to be utilized at initialization processing, maintenance processing, recovery from failure or the like. The service definition storing part switches processing of a received message in accordance with the environment state by referring to the service execution environment.

The service definition storing part 40 stores a service definition 41 as in Embodiment 2. However, in Embodiment 3, the service definition 41 includes a service managing part 44, in addition to the message-finite state machine linkage information 42 and the control parameter 43 for the finite state machine, as the elements thereof. This service managing part 44 refers to the service execution environment at recovery from failure or the like to manage corresponding finite state machine definition 51 or the control parameter 43.

The message-sending and receiving 20 and the finite state machine definition storing part 50 are the same as in Embodiment 1, and will not be described further.

The processing flow of the message processing system having the configuration of Embodiment 3 will be described.

The processes from Operations 601 to 605 are the same as Operations 401 to 405. These processes are extracting information indicating the type of a message (Operation 601), obtaining information indicating the type of a finite state machine using the information indicating the type of the message and the state of the execution environment as the keys (Operation 602), obtaining the information on the parameters 43 for controlling the operation of the finite state machine (Operation 603), obtaining the finite state machine definition 51 to be constructed (Operation 604), defining components of the implementation of the message processing, and constructing the finite state machine (Operation 605).

The value of the state of the execution environment is switched to switch between regular operation and received message processing for initialization, maintenance and recovery from failure. The finite state machine definition storing 51 in accordance with the service definition 41 is obtained based on this switching (Operation 606), and the finite state machine is constructed (Operation 607). When this work is completed, the value is returned.

### Embodiment 4

A message processing system of Embodiment 4 includes a message processing part including a finite state machine that executes processing of a message(s) as transition of the state, regarding the processing content corresponding to the message as a state of each processing stage of the message, a service definition storing part in which a plurality of service definitions are stored, and a finite state machine definition storing part in which definitions of the finite state machine are stored. In Embodiment 4, the service definition storing part has a plurality of service definitions 41, and the message processing system of Embodiment 4 can cope with a plurality of services. The message processing part 10 includes a service suitability determination processing part 12, and analyzes a received message to determine which service is suitable, and constructs a finite state machine using a corresponding service definition 41.

The outline of the entire configuration of the message processing system of Embodiment 4 and the outline of the processing flow of this system will be described with reference to the accompanying drawings.

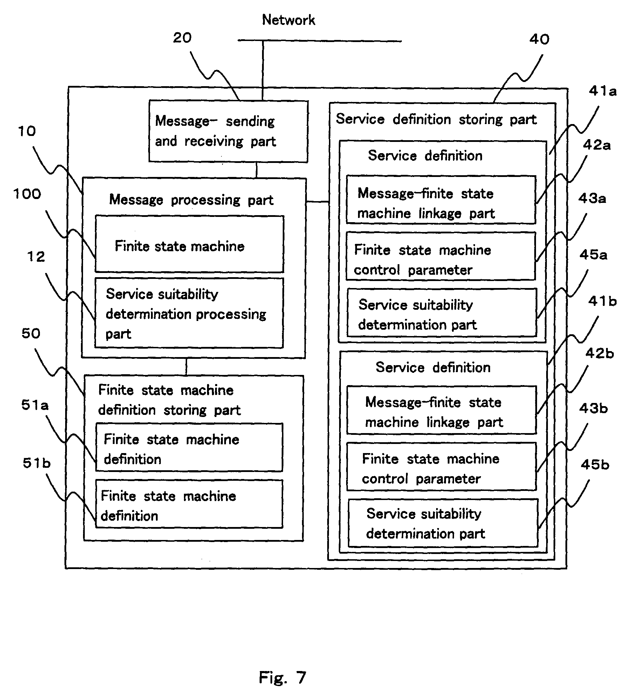

Fig. 7 is a diagram showing the configuration of the outline of the message processing system of Embodiment 4.

In Fig. 7, reference number 10 denotes a message processing part, reference number 20 denotes a message-sending and receiving part, reference number 40 denotes a service definition storing part, and reference number 50 denotes a finite state machine definition storing part.

The message processing part 10 virtually includes a finite state machine 100 and executes processing as transition of the finite state and includes the service suitability determination processing part 12. The service suitability determination processing part 12 determines the service suitable to the received message and determines the service definition 41 where the definition of this service content is stored.

The service definition storing part 40 stores a plurality of service definitions 41 for each service definition. Each service definition 41 includes a service suitability determination part 45. This service suitability determination part 45 determines whether or not its own service definition 41 corresponds to the service definition determined by the service suitability determination processing part 12, and when it corresponds thereto, the service suitability determination part 45 makes its own service definition 41 active.

The message-sending and receiving 20 and the finite state machine definition storing part 50 are the same as in Embodiment 1, and will not be described further.

The processing flow of the message processing system having the configuration of Embodiment 4 will be described.

In the case of the message processing system for UI, the user inputs a processing content such as a search request from the user interface.

The message processing part 10 extracts information indicating the type of a message from a received message, and delivers it to the service suitability determination processing part 12 (Operation 801).

The service suitability determination processing part 12 determines the service definition 41 suitable to the service for message processing based on the information indicating the type of the message (Operation 802).

Each service definition 41 of the service definition storing part 40 includes a service suitability determination part 45. This service suitability determination part 45 determines whether or not the service definition 41 that the service suitability determination part 45 itself manages corresponds to the service definition determined at Operation 802 (Operation 803).

After it is determined by the service suitability determination part 45 that the service definition 41 is suitable, the following operations are performed: obtaining information indicating the type of a finite state machine using the information indicating the type of the message as the key (Operation 804), obtaining the information on the parameter 43 for controlling the operation of the finite state machine (Operation 805), obtaining the finite state machine definition 51 to be constructed (Operation 806), defining components of the implementation of the message processing, and constructing the finite state machine (Operation 807). These operations are the same as Operations 402 to 405 in Fig. 4, and will not be described further.

By the above Operations 801 to 807, the message processing system of this embodiment, which includes a plurality of service definitions to cope with a plurality of services, can perform message processing by constructing the finite state machine with the service definition suitable for the received message.

### Embodiment 5

Embodiment 5 shows variation examples of the finite state machine virtually constructed in the message processing system of the present invention. In particular, Embodiment 5 shows a variation example of the following finite state machine. A user supplies a message(s) such as an inquiry to this message processing system via a message processing system for a user interface. The message supplied in this message processing system is transmitted to other message processing systems, and the first message processing system integrates the reply messages. In this manner, the finite state machine of this embodiment acts as a facilitator. Such a finite state machine will be described in this embodiment.

The various finite state machines described below are constructed in the message processing part 10 in either one of the message processing system configurations shown in Embodiments 1 to 4. Only one kind of the finite state machine can be programmed in the message processing part 10, or the finite state machine can be constructed dynamically based on the service definition or the finite state machine definition.

A first finite state machine is the most basic finite state machine, and has been described in Embodiment 1. This first finite state machine shifts its state a start state 201, a message processing start state 202, a message reply wait state 203 (including event wait processing, reply reception processing and reply processing therein) and an end state 204. Each state is the same as that in Embodiment 1, and therefore will not described further in this embodiment.

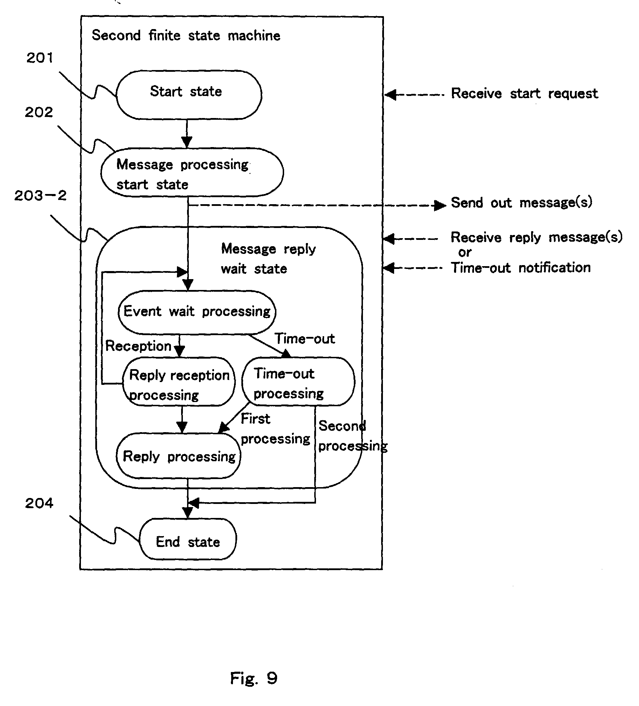

Fig. 9 shows a second finite state machine. The second finite state machine shifts its state a start state 201, a message processing start state 202, a message reply wait state 203-2 (including event wait processing, reply reception processing and reply processing) and an end state 204. The start state 201 and the message processing start state 202 are the same as those in Embodiment 1. However, the event wait processing in the message reply wait state 203-2, a time-out time is set, and when a reply message is not received within this time limit, the time-out processing is performed. Examples of the time-out processing are as follows: reply processing is started to be performed at a time-out time, and in the reply processing, reply message processing is performed based on the replies that have been received by the time-out time (a first processing); and the state is shifted forcibly to the end state (a second processing).

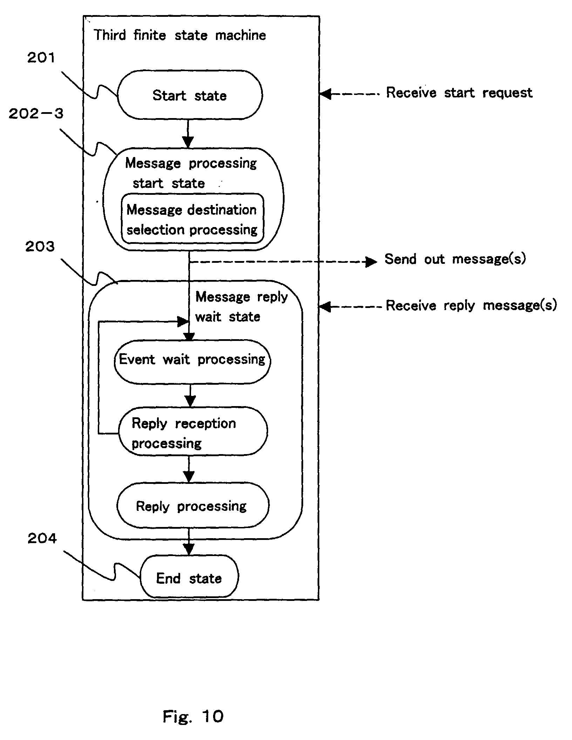

Fig. 10 shows a third finite state machine. The third finite state machine shifts its state a start state 201, a message processing start state 202-3, a message reply wait state 203 (including event wait processing, reply reception processing and reply processing) and an end state 204. In this finite state machine, the message processing start state 202-3 further includes processing for selecting where to transfer the message. A message processing system with which the message processing system of this embodiment is operated in cooperation via messages on the network, or an object is selected and a message is transmitted thereto. Examples of patterns for selecting where to transfer a message(s) in this processing for selecting where to transfer a message(s) are as follows.

As first processing for selecting where to transfer a message(s), destination information on possible message processing systems to which a message(s) is transferred is previously stored, and at the time of the transmission of the message, the message is transmitted referring to the destination information. The destination information on the possible message processing systems to which a message(s) is transferred may be stored and accumulated by the user, or may be extracted from advertisement information transmitted from other message processing systems distributed on the network for accumulation. Herein, "advertisement information" refers to information regarding its own reply ability; for example, what kind of service it can provide, or what kind of message it can respond to. In other words, it is information notified as "advertisement" to other message processing systems, such as destination information. The first pattern for selecting where to transfer a message(s) is useful when a message processing system to be operated in cooperation can be previously specified, rather than when supplying the message to the entire network.

As second processing for selecting where to transfer a message(s), information that designates where to transfer a message(s) is extracted from the message input from the user, and then the message is transmitted thereto. This is useful when the user designates a specific database to be used or a specific message processing system for cooperative operation.

As third processing for selecting where to transfer a message(s), a message processing system to which a message is transferred is selected based on the analysis of the content of the message, and then the message is transmitted thereto. In order to realize this function, a part for analyzing the content of the message and a part for storing the destination information on the message processing systems that can process the message are required. The part for analyzing the content of the message classifies the content, for example by analyzing the content of the message. Regarding storage of the destination information, not only advertisement information supplied by other message processing systems is stored and accumulated, but also information on other message processing systems is collected actively by the agent function and is stored and accumulated with linkage between the content of the message and the destination information of the corresponding message processing system.

The event wait processing and the reply processing included in the message reply wait state 203 and the end state 204 are the same as those in Embodiment 1. Processing in the case of waiting for a plurality of message processing systems to which a message is transferred and thus a plurality of replies will be described later.

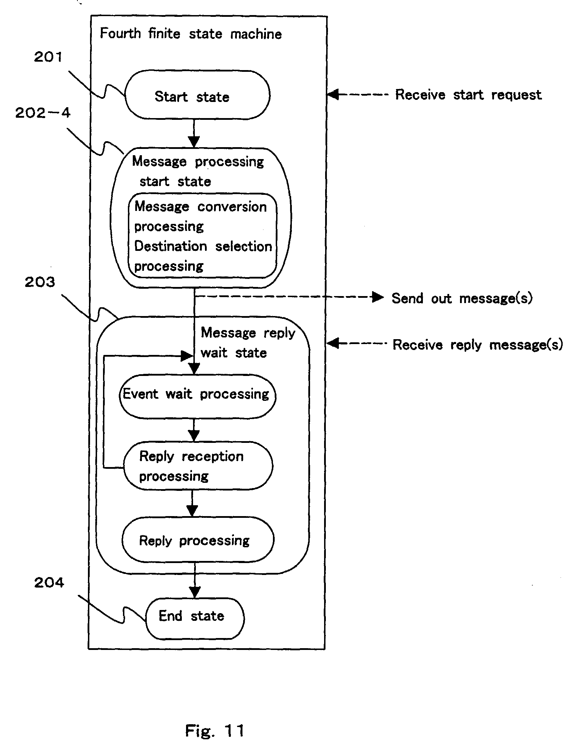

Fig. 11 shows a fourth finite state machine. The fourth finite state machine shifts its state a start state 201, a message processing start state 202-4, a message reply wait state 203 (including event wait processing, reply reception processing and reply processing), and an end state 204. In this embodiment, the message processing start state 202-4 further include a function for converting a message(s). This message-conversion function converts the format of the message to be transmitted into the format that can be received by the message processing system on the other side. The following examples can be included in the conversion processing: conversion from the scheme of the message into the database scheme of the database system of the message processing system on the other side; conversion of the item name; or conversion of the item value. The format that can be received by the message processing system on the other side can be extracted from the "advertisement information" and accumulated. This conversion allows the cooperative operation of the message processing systems to be performed smoothly so that the message can be received by the message processing system on the other side and it is expected to improve the reply accuracy and reduce the reply wait time.

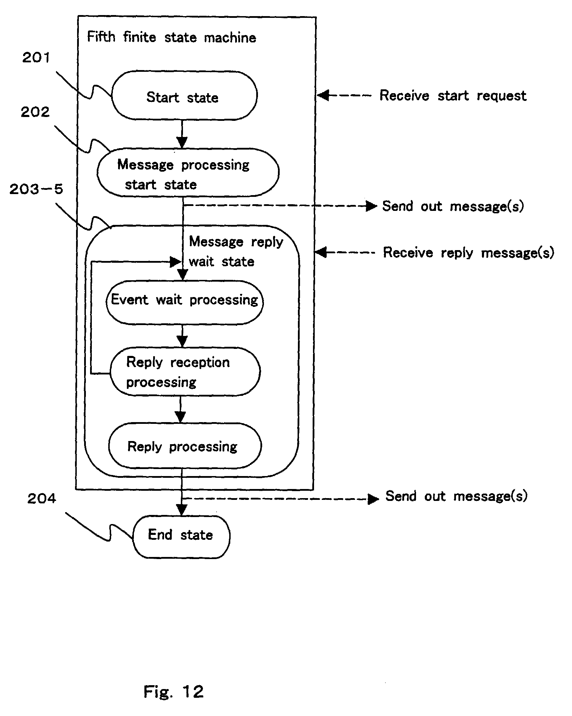

Fig. 12 shows a fifth finite state machine. The fifth finite state machine shifts its state a start state 201, a message processing start state 202, a message reply wait state 203-5 (including event wait processing, reply reception processing and reply processing) and an end state 204. In this embodiment, a function for sending out a message(s) is further included in the transition from the message reply wait state 203-5 to the end state 204. This message-sending function refers to a function that replies at the end of the reply processing or responds in the form of a message that a reply is obtained. This function allows a reply to be returned as a message to other message processing systems.

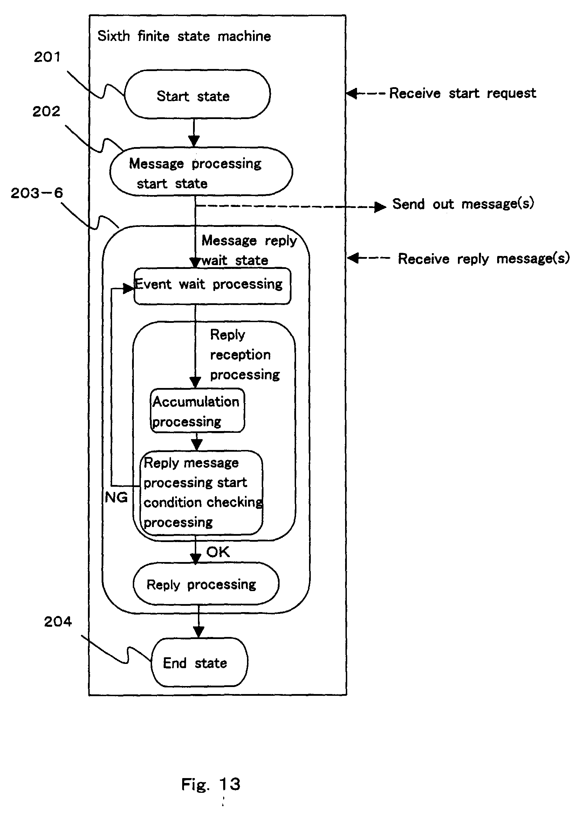

Fig. 13 shows a sixth finite state machine. The sixth finite state machine shifts its state a start state 201, a message processing start sixth state 202, a message reply wait state 203-6 (including event wait processing, reply reception processing and reply processing) and an end state 204. In this sixth finite state machine, various variations are provided in the condition of the transition from the event wait processing to the reply processing included in the message reply wait state 203-6.

As shown in Fig. 13, the message reply wait state 202-6 includes the event wait processing, the reply reception processing and the reply processing, and the reply reception processing includes reply message accumulation processing and reply message processing start condition checking processing. The event wait processing is processing for waiting reply message reception, and as described later, processing returns to this event wait processing by loop processing until the reply message processing start condition is satisfied. The reply message accumulation processing is processing for accumulating replies that are received in the event wait processing. The reply message processing start condition checking processing in the reply reception processing is processing for checking whether or not the transition condition from the reply reception processing to the reply processing based on the reply messages that have been accumulated. In the case where the transition condition is not satisfied, the procedure shifts to the event wait processing, and waits for further reply messages. In the case where the reply message processing start condition is satisfied, the procedure shifts to the reply processing.

Examples of the reply message processing start condition is as follows. A first reply message processing start condition is that the replies are received from all the destinations of the transmitted messages. This includes not only the case where the message is transmitted to a plurality of destinations, but also the case where the message is transmitted to one destination. In this case, the event wait processing continues until all the replies are obtained.

A second reply message processing start condition is that the total amount of the content has reached a predetermined value. Examples of the total amount of the content are the absolute value of the number of replies, the ratio of the number of the obtained replies to all the expected replies, the total number of bites of the obtained reply messages, the total number of records of the obtained reply messages or the like. In this case, even if all the reply messages have not been received, the reply message processing can be started when the predetermined total amount of the content that is estimated to keep acceptable reply quality has been reached. Thus, if a part of reply messages cannot be obtained for long time because of malfunction of a part of message processing systems or malfunction of the network, it is not necessary to maintain the wait state in vain, so that the system can be operated at a reasonable time cost.

A third reply message processing start condition is that a reply that is not a failure notification is obtained. In the case where not replies from all the destinations, but one reply is desired, a failure notification may be received as a reply from the message processing system on the other side because of the failure of the processing at the message processing system on the other side. If the reply message processing is started with this reply, the resulted reply is not valid. A normal reply may be received from another message processing system later, and therefore the reply message processing start condition can be that a reply that is not a failure notification is obtained.

A fourth reply message processing start condition is that in the case where not replies from all the destinations, but one reply is desired, a reply that is not a failure notification nor has an empty content is obtained. In some cases, although the reply obtained from the message processing system on the other side is not a failure notification, it may be an "empty" reply because no corresponding data are found as a result of search. If the reply message processing is started with this reply, the resulted reply is not valid. A reply that is not empty may be sent from another message processing system layer, and therefore the reply message processing start condition can be that a reply that is not a failure notification nor empty is obtained.

The examples of variations of the reply message processing start condition have been described above. Thus, by adjusting the reply message processing start condition, if a part of reply messages cannot be obtained for long time because of malfunction of a part of message processing systems or malfunction of the network, it is not necessary to maintain the wait state in vain, so that the system can be operated at a reasonable time cost.

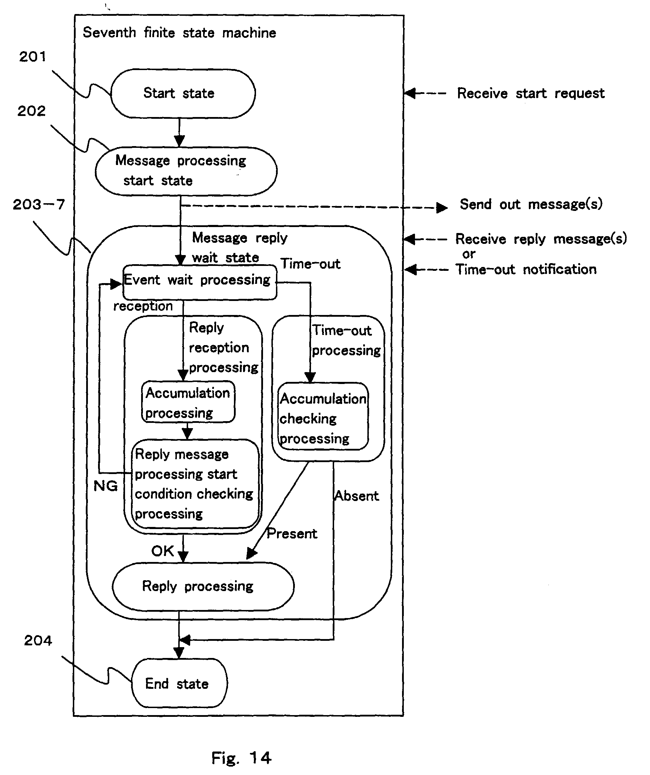

Fig. 14 shows a seventh finite state machine. The seventh finite state machine shifts its state a start state 201, a message processing start sixth state 202, a message reply wait state 203-7 (including event wait processing, reply reception processing and reply processing) and an end state 204. In this seventh finite state machine, in the message reply wait state 203-7, the reply message processing start condition checking processing described in the sixth finite state machine and the time-out processing described in the second finite state machine are combined. This combination has the following function. In the case where a wait state lasts for long time because the reply message processing start condition is not satisfied in the reply message processing start condition checking processing described in the sixth finite state machine, the time-out processing cancels the processing at a predetermined time elapse.

The reply processing is performed in accordance with the processing in the message reply wait state 203-7. More specifically, the state is shifted to the reply processing in the following cases: The reply message processing start condition is satisfied so that the state shifts from the reply reception processing to the reply processing; the state shifts from the time-out processing to the reply processing by time-out; and replies are obtained and accumulated. When no replies are obtained or accumulated, the state shifts to the end state.

In the reply processing, all the replies accumulated for integration processing can be treated as those to be subjected to integration processing. Alternatively, one or a predetermined number of replies that satisfies a predetermined condition of the accumulated replies can be treated as those to be subjected to integration processing.

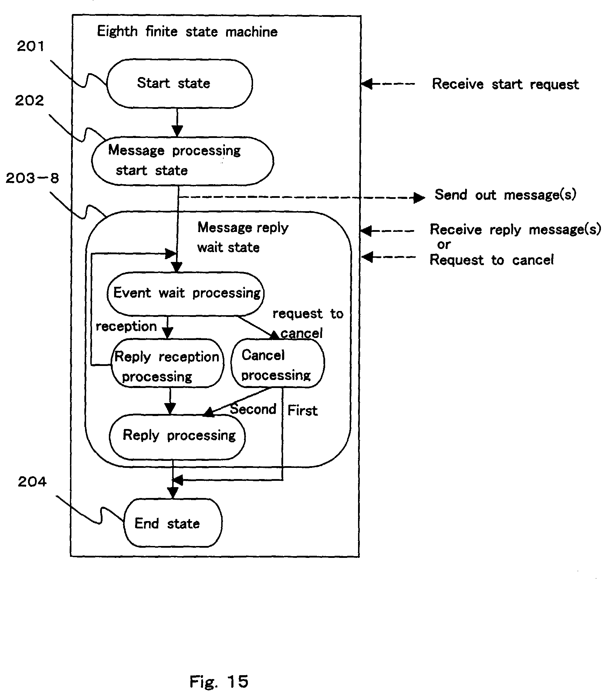

Fig. 15 shows an eighth finite state machine. The eighth finite state machine shifts its state a start state 201, a message processing start sixth state 202, a message reply wait state 203-8 (including event wait processing, reply reception processing and reply processing) and an end state 204. In this eighth finite state machine, in the message reply wait state 203-8, a request(s) to cancel processing can be received. In some cases in practical use, a user or a system requests to cancel processing. For example, a user may come up with a second thought that the message content is inappropriate and may wish to retransmit a changed content, or a user may wish to cancel the processing because the reply wait state is becoming too long. In such a case, a request to cancel processing is received and the state is forcibly shifted from the message reply wait state 203-8 to the end state 204. In the message reply wait state 203-8 in the eight finite state machine, when there is no request to cancel processing, the same processes are performed as in the first finite state machine. However, when a request to cancel processing is received, a different process is performed. As first cancel processing, the processing is forcibly cancelled regardless of the presence of accumulated replies and shifted to the end state 204. When the previous content of the message is inappropriate so that it is desired to cancel the processing, the first cancel processing is suitable. As second cancel processing, when some replies are accumulated at the time when a request to cancel processing is received, the state shifts to the reply processing to integrate the accumulated replies for response. When the reply wait time lasts too long and it is desired to cancel the processing, the second processing is suitable.

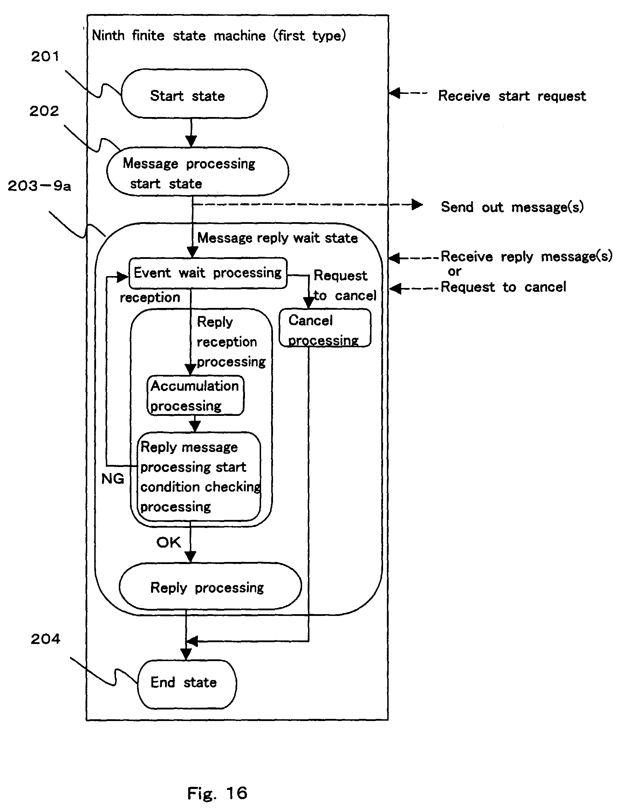

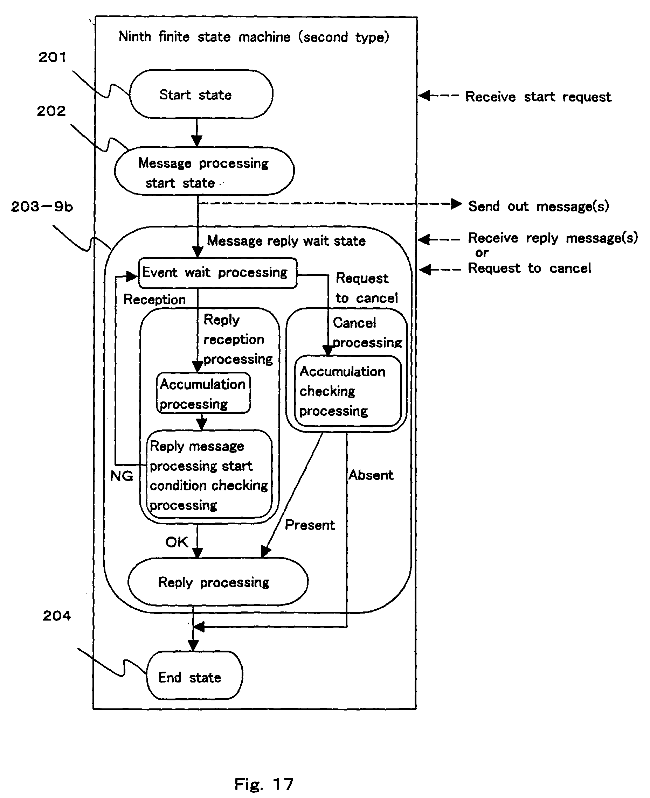

Figs. 16 and 17 show ninth finite state machines. The ninth finite state machine shifts its state a start state 201, a message processing start sixth state 202, a message reply wait state 203-9 (including event wait processing, reply reception processing and reply processing) and an end state 204. In this ninth finite state machine, in the message reply wait state 203-9, the reply message processing start condition checking processing described in the sixth finite state machine and the cancel processing described in the eighth finite state machine can be combined. This combination has the following function. In the case where a request to cancel processing is received before the reply message processing start condition described in the sixth finite state machine is satisfied, not the reply message processing but the cancel processing is performed. The ninth finite state machine also can be classified into two types depending on the cancel processing in response to the request to cancel processing. A first type is shown in Fig. 16. In this type, when a request to cancel processing is received, the first cancel processing described in the eighth finite state machine is performed. More specifically, processing is forcibly cancelled regardless of the presence of accumulated replies and shifted to the end state 204. A second type is shown in Fig. 17. In this type, when a request to cancel processing is received, the second cancel processing described in the eighth finite state machine is performed. More specifically, when some replies are accumulated at the time when a request to cancel processing is received, the state shifts to the reply processing to integrate the accumulated replies for response. The reply message processing start condition checking processing and the reply message processing are the same as those of the sixth finite state machine.

### Embodiment 6

Embodiment 6 shows examples of variations of the finite state machines virtually constructed in the message processing system of the present invention, as in Embodiment 5. In particular, Embodiment 6 shows a variation example of the following finite state machine. An object such as a message processing system that is in charge of accessing a database system on the network is designated, and the state thereof is monitored. The finite state machine of this embodiment has such a state monitoring function.

The various finite state machines described below are constructed in the message processing part 10 in either one of the message processing system configurations shown in Embodiments 1 to 4. Only one kind of the finite state machine can be programmed in the message processing part 10, or the finite state machine can be constructed dynamically based on the service definition or the finite state machine definition.

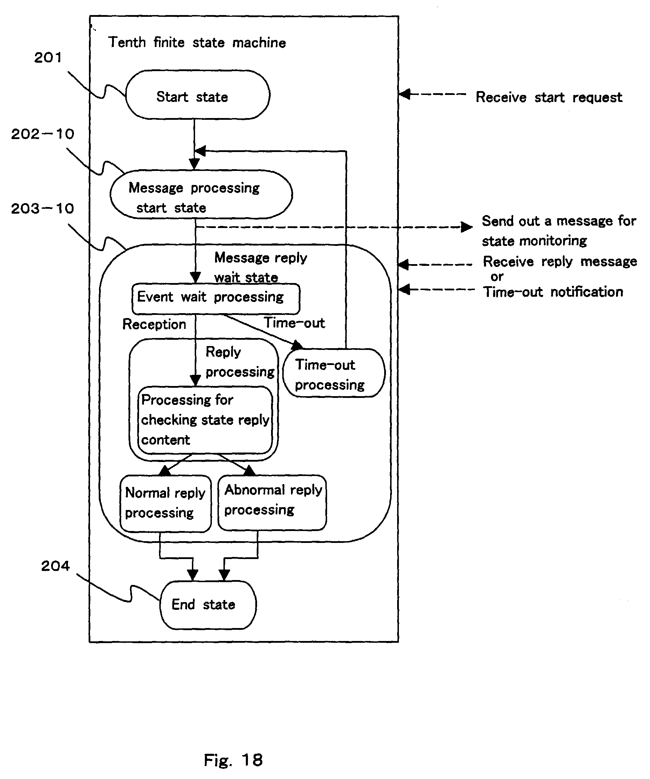

Fig. 18 shows a tenth finite state machine. This tenth finite state machine shifts its state a start state 201, a message processing start state 202-10, a message reply wait state 203-10 (including event wait processing, time-out processing, reply reception processing, normal reply processing and abnormal reply processing therein) and an end state 204.

A message for monitoring the state of an object to be monitored is prepared and sent out onto the network, and the state shifts from the message processing start state 202-10 to the message reply wait state 203-10 in the following cases: the case where a request to monitor the state of a network resource from a user; the case where a request to monitor the state of a network resource from a manager of a system; or the case where information regarding the state of the network resources is collected as a facilitator.

As shown in Fig. 18, in the message reply wait state 203-10, following the event wait processing for waiting for a message reply, processing for checking the reply message content regarding the state and the time-out processing described in the second finite state machine are combined. The outline of the processing flow of the message reply wait state 203-10 is as follows. First, when a reply message is received from an object whose state is monitored within the time-out limit in the event wait state, the reply message content concerning the state is checked. The result of the check determines whether the state of the object to be checked is normal or abnormal, and managing processing corresponding to each of a normal reply and an abnormal reply is performed. Then, the state shifts to the end state 204. Furthermore, in the event wait processing, when the time-out limit is reached, the process is shifted to the time-out processing and is shifted to the message processing start state 202-10 in the tenth finite state machine. More specifically, in the case of the time-out, information regarding the state of an designated object to be checked has not been obtained yet. Therefore, a loop is executed to repeat processing for generating a message for monitoring the state to continue the processing until information regarding the state can be obtained.

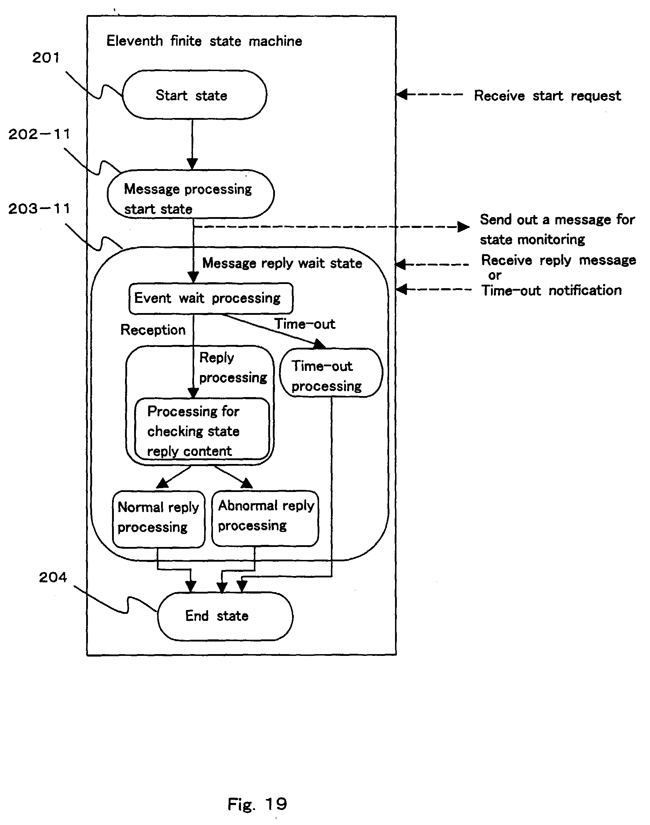

Fig. 19 shows an eleventh finite state machine. As in the eleventh finite state machine, the eleventh finite state machine shifts its state a start state 201, a message processing start state 202-11, a message reply wait state 203-11 (including event wait processing, time-out processing, normal reply processing and abnormal reply processing therein) and an end state 204.

The eleventh finite state machine is different in the time-out processing from the tenth finite state machine. In the eleventh finite state machine, in the case of the time-out, the state is forcibly shifted to the end state 204 under the following estimation: The time-out is caused by failures of the designated objects to be checked or failure of a part of the network, and therefore, even if the message is retransmitted, the possibility of obtaining a valid reply is very low.

The other states, i.e., the message processing start state 202-11, the message reply wait state 203-11 except the time-out processing and the end state 204-11, are the same as those of the tenth finite state machine, and therefore will not be described further.

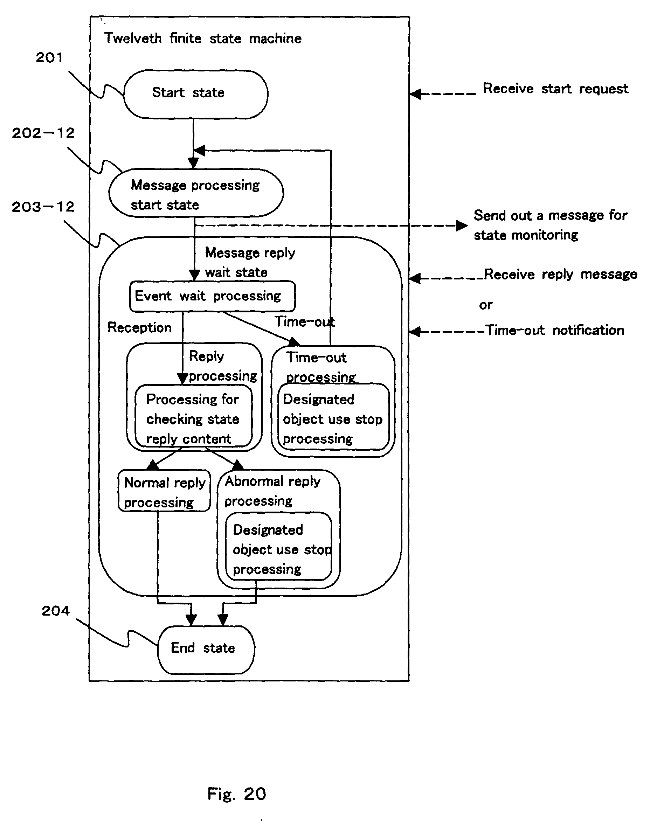

Fig. 20 shows a twelfth finite state machine. As in the tenth finite state machine, the twelfth finite state machine shifts its state a start state 201, a message processing start state 202-12, a message reply wait state 203-12 (including event wait processing, time-out processing, normal reply processing and abnormal reply processing therein) and an end state 204.

In the twelfth finite state machine, preparation of a message for monitoring the state of an object to be checked and transmission thereof in the message processing start state 202-12, and the event wait processing in the message reply wait state 203-12 are performed in the same manner as in tenth finite state machine. Unlike the tenth finite state machine, the twelfth finite state machine performs specific processing when abnormality is detected in processing for checking the reply message content regarding the state in the reply processing in the message reply wait state 203-12 and when time-out is detected during event wait.

When abnormality is detected in processing for checking the reply message content regarding the state in the reply processing in the message reply wait state 203-12, processing is shifted to the abnormal reply processing, and processing for canceling the use of the designated object is performed to remove the object from the message destination information, determining that the designated object is inappropriate as a destination to which the message is transferred. In other words, the designated object has some failure and it is not expected to obtain a valid reply therefrom even if a message is transferred, or it is highly possible that time-out occurs before receiving a reply message. Therefore, these objects are removed from the destinations to which the message is transferred beforehand.

Similarly, when time-out occurs, processing for canceling the use of the designated object is performed to remove the object to be checked from the message destination information as the time-out processing. After the processing for canceling the use of the designated object is performed, processing shifts to the message processing start state 202-12 again, and a loop is executed to resume the processing for checking other designated objects.

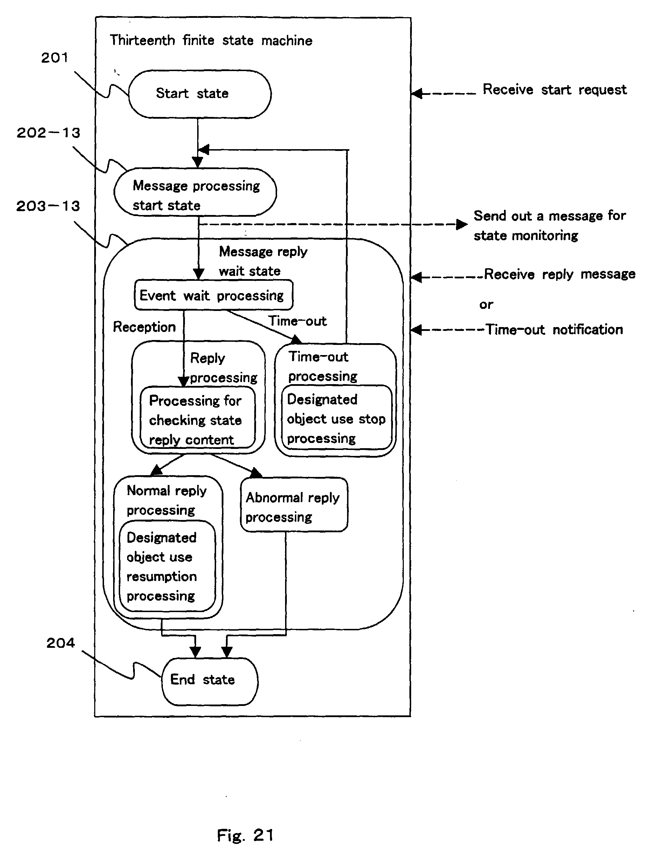

Fig. 21 shows a thirteenth finite state machine. The thirteenth finite state machine shifts its state a start state 201, a message processing start state 202-13, a message reply wait state 203-13 (including event wait processing, time-out processing, normal reply processing and abnormal reply processing therein) and an end state 204.

In the thirteenth finite state machine, preparation of a message for monitoring the state of an object to be checked and transmission thereof in the message processing start state 202-13, and the event wait processing in the message reply wait state 203-13 are performed in the same manner as in tenth finite state machine. The thirteenth finite state machine is different from the twelfth finite state machine in the processing in the message reply wait state 203-13 when time-out is detected during event wait and when normality is confirmed in processing for checking the reply message content regarding the state in the reply processing. The thirteenth finite state machine allows room for further examining whether the time-out is caused by the failure of the designated object or temporary overload or temporary poor communication on the network which does not cause a large problem in executing the message processing.

When time-out occurs, processing for canceling the use of the designated object is performed to provisionally remove the object from the message destination information as the time-out processing. After the processing for canceling the use of the designated object is performed, the processing shifts to the message processing start state 202-13 again, and a loop is executed to resume the processing for checking designated objects including this designated object. This processing for canceling the use of the designated object removes this designated object from the message designations for a general search request or the like. However, a message for making an inquiry about the state continues to be sent out in the message processing start state 202-13, and the state shifts to the message reply wait state 203-13.

When a reply message regarding the state is obtained from the designated object in the event wait processing in the message reply wait state 203-13, the content thereof is checked. If the reply content is normal, the processing for canceling the use of the designated object is cancelled, determining that the cause of the failure or the like is eliminated and the designated object is added to the destination.

### Embodiment 7

Embodiment 7 shows examples of variations of the finite state machines virtually constructed in the message processing system of the present invention, as in Embodiment 5. In particular, Embodiment 7 shows a variation example of a finite state machine where the message reply state has multiple stages. This example is useful when transmission of a message(s) regarding inquiry processing to the network to obtain the destination information of where to transfer a message(s) and the message reply wait thereof are inserted as pre-processing of transmission of the message and the message reply wait.

The various finite state machines described below are constructed in the message processing part 10 in either one of the message processing system configurations shown in Embodiments 1 to 4. Only one kind of the finite state machine can be programmed in the message processing part 10, or the finite state machine can be constructed dynamically based on the service definition or the finite state machine definition.

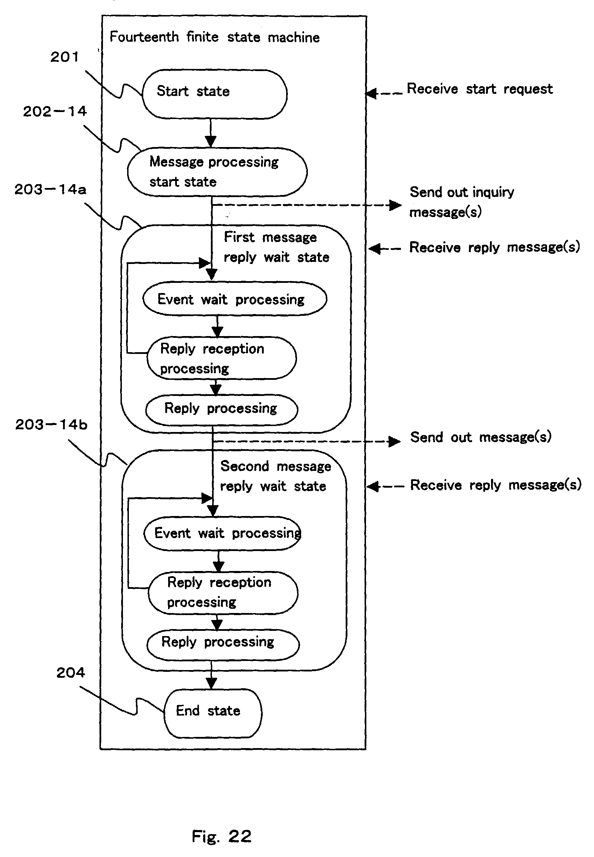

Fig. 22 is a fourteenth finite state machine. This fourteenth finite state machine shifts its state a start state 201, a message processing start state 202-14, a first message reply wait state 203-14a, a second message reply wait state 203-14b and an end state 204.

When a message(s) is received, the state shifts from the start state 201 to the message processing start state 202-14. In this point, in some cases, a suitable destination for processing of the content of the message is unknown, and the user may wish to find out the destination beforehand. For example, information regarding the destination to which a message(s) is sent out may not be available for specific work such as a request to translate a text. In the message processing start state 202-14, a message(s) regarding inquiry processing is sent out. Examples of this message regarding inquiry processing are inquiry processing of the destination information of systems that have processing ability related to the work content, inquiry processing of the information regarding the processing ability of the system on the other side and the like. After the inquiry message is sent out, the state shifts to the first message reply wait state 203-14a.

When a reply to the inquiry message is received, reply processing is performed. In the first message reply wait state 203-14a, the time-out processing described in the second finite state machine, the processing for checking reply message processing start condition described in the sixth finite state machine and the canceling processing described in the eighth finite state machine can be combined.

In the reply processing in the first message reply wait state 203-14a, the content of the reply message is processed so that effective information for selecting where to transfer a message(s) is extracted. Examples of such information are destination information corresponding to the inquiry message, information regarding the processing ability of the system on the other side and the like. A message processing system to which a message(s) is transferred is selected based on the extracted information, a message(s) indicating the processing content input from the user is sent out, and the state shifts to the second message reply wait state 203-14b.

In the second message reply wait state 203-14b, when a reply message is received, reply processing is performed. In the second message reply wait state 203-14b as well, the processing for accumulating replies, the time-out processing described in the second finite state machine, the processing for checking reply message processing start condition described in the sixth finite state machine and the canceling processing described in the eighth finite state machine can be combined.

In the reply processing in the second reply message wait processing 203-14b, processing for integrating the reply messages that have been accumulated is performed, and then the state shifts to the end state 204.

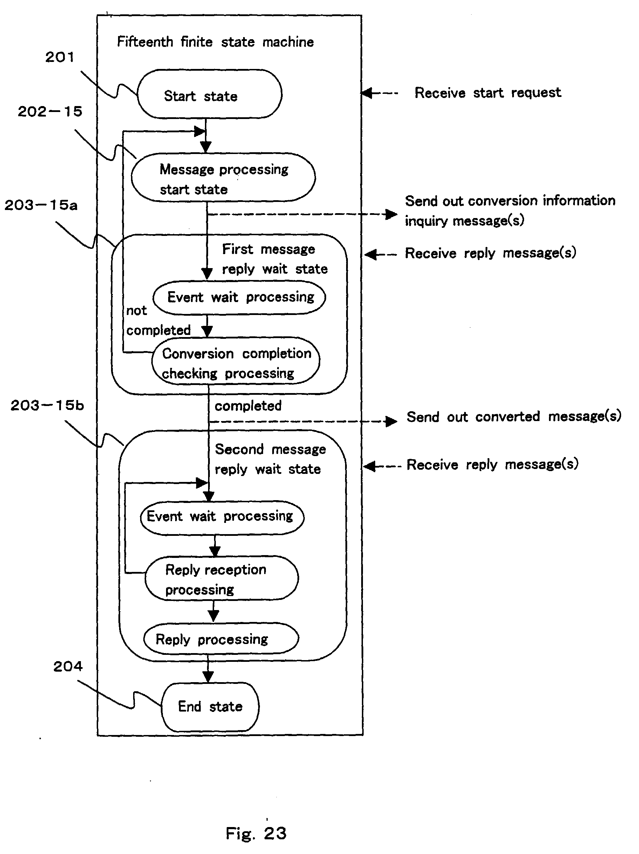

Fig. 23 is a fifteenth finite state machine. This fifteenth finite state machine shifts its state a start state 201, a message processing start state 202-15, a first message reply wait state 203-15a, a second message reply wait state 203-15b and an end state 204.

In order to realize a function for converting a message(s) described in the finite state machine, in the message processing start state 202-15, the fifteenth finite state machine sends out an inquiry message regarding information such as the database scheme, the item name, the item value or the like of the system on the other side, and the state shifts to the first message reply wait state 203-15a.

When a reply to the inquiry message regarding conversion information is obtained, the message is converted. When the conversion is not completed, the state shifts to the message processing start state 202-15 again.

When the conversion is completed, the converted message is sent out to the destination, and the state shifts to the second message reply wait state 203-15b.

In the second message reply wait state 203-15b as well, processing for accumulating replies, the time-out processing described in the second finite state machine, the processing for checking reply message processing start condition described in the sixth finite state machine and the canceling processing described in the eighth finite state machine can be combined.

In the reply processing in the second reply message wait processing 203-15b, processing for integrating the reply messages that have been obtained is performed, and then the state shifts to the end state 204.

### Embodiment 8

Embodiment 8 shows examples of variations of the finite state machines virtually constructed in the message processing system of the present invention, as in Embodiment 5. In particular, Embodiment 8 shows a variation example of a finite state machine having different reply processing from that the finite state machines of the preceding embodiments.

The various finite state machines described below are constructed in the message processing part 10 in either one of the message processing system configurations shown in Embodiments 1 to 4. Only one kind of the finite state machine can be programmed in the message processing part 10, or the finite state machine can be constructed dynamically based on the service definition or the finite state machine definition.

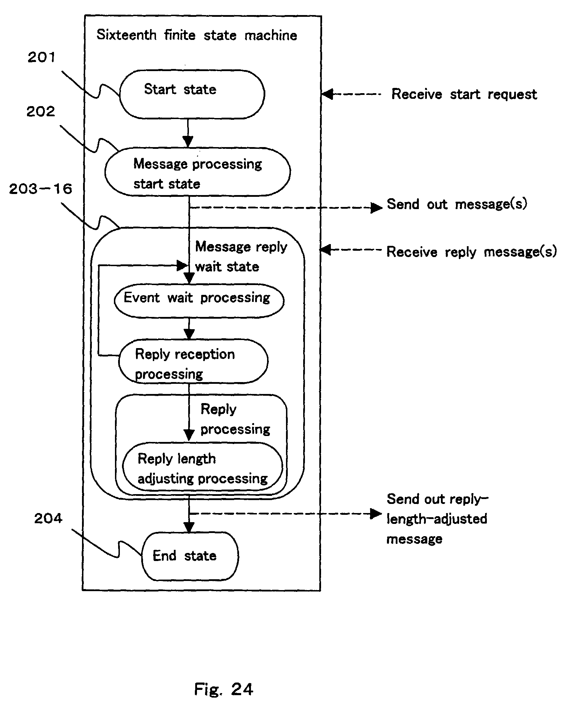

Fig. 24 shows a sixteenth finite state machine. The finite state of the sixteenth finite state machine shifts its state a start state 201, a message processing start state 202, a message reply wait state 203-16 and an end state 204.

In the sixteenth finite state machine, the start state 201 and the message processing start state 202 are the same as those of the first finite state machine and other preceding finite state machines. In the message reply wait state 203-16, processing for integrating reply messages is performed. In this case, a reply length is adjusted. For example, when a plurality of replies are obtained so that a reply length is long, the reply length is reduced to a predetermined length. After the reply length is adjusted, the reply is transmitted to the user and the state shifts to the end state 204.

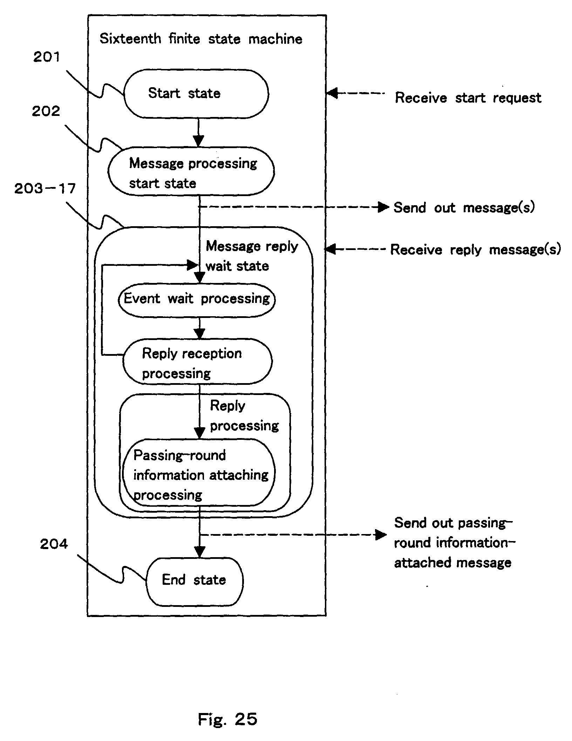

Fig. 25 shows a seventeenth finite state machine. The finite state of the seventeenth finite state machine shifts its state a start state 201, a message processing start state 202, a message reply wait state 203-17 and an end state 204.

In the seventeenth finite state machine, the start state 201 and the message processing start state 202 are the same as those of the first finite state machine and other preceding finite state machines. In the message reply wait state 203-17, processing for integrating reply messages is performed. In this case, information indicating the history of the message processing is attached and am integrated reply message is generated. Herein, the history information attached to the message is referred to as "passing-round information". If the passing-round information is attached, it is expected that the utility of the message processing system can be improved for the following reasons. Every time this integrated reply message is additionally processed on the user terminal or is transmitted to other message processing systems and additionally processed, the history can be added to the passing-round information. Thus, the history of the past message processing can be utilized.

### Embodiment 9

Embodiment 9 shows an example of a variation of the assignment relationship between a processing process (thread) and a finite state machine when the finite state machine is virtually constructed in the message processing system of the present invention.

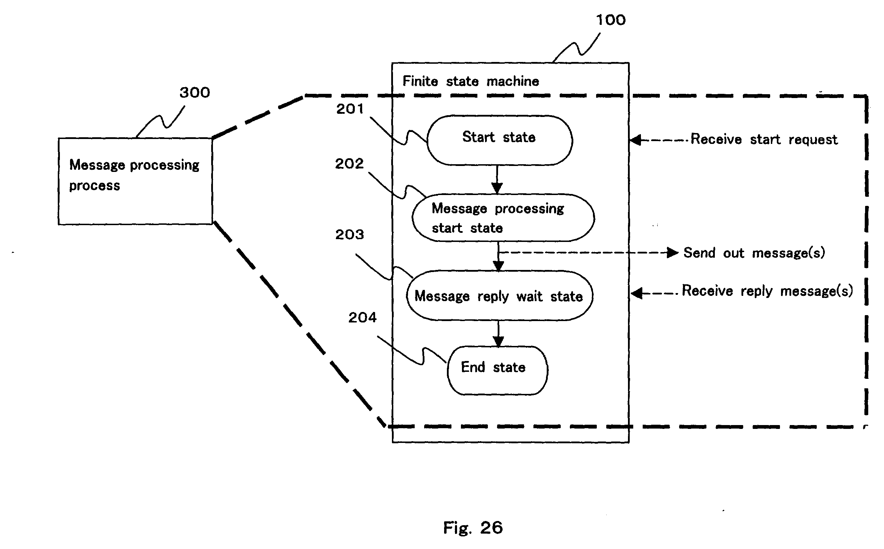

First assignment relationship between the processing process (thread) and the finite state machine is that all the state transitions of the finite state machine are sequentially executed by a single process (thread). In other words, this relationship is that one process (thread) is assigned to be in charge of the execution of all the state transitions of the finite state machine. Fig. 26 shows the concept of this relationship. As shown in Fig. 26, one message processing process 300 is assigned to execute each of the finite states of the finite state machine, i.e., the start state 201, the message processing start state 202, the message reply wait state 203 and the end state 204. When a plurality of finite state machines are constructed, one process (thread) can be assigned to each finite state machine.

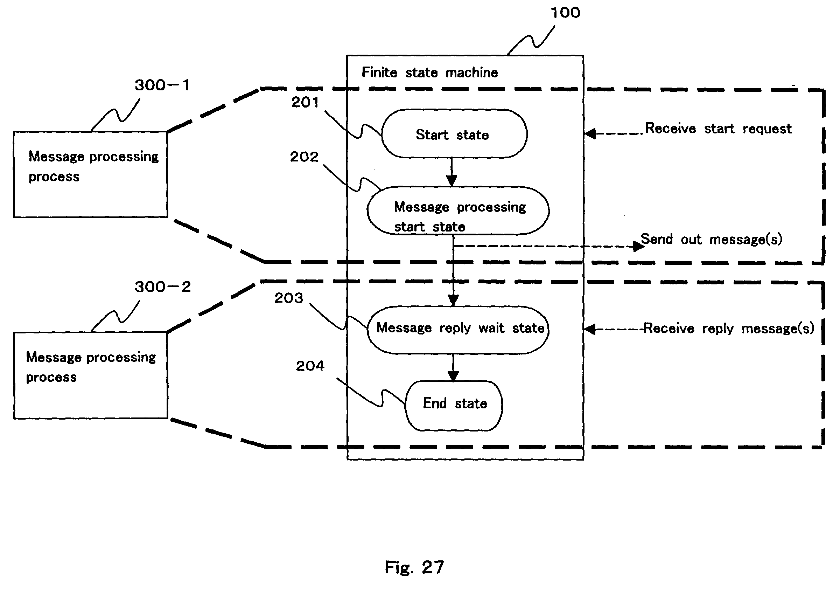

Next, second assignment relationship between the processing process (thread) and the finite state machine is that one processing process (thread) is assigned to be in charge of the execution of an arbitrary state of the state transition. Fig. 27 shows the concept of this relationship. In this example, as shown in Fig. 27, a message processing process 300-1 is in charge of the execution of the start state 201 and the message processing start state 202, and a message processing process 300-2 is assigned to be in charge of execution of the message reply wait state 203 and the end state 204.

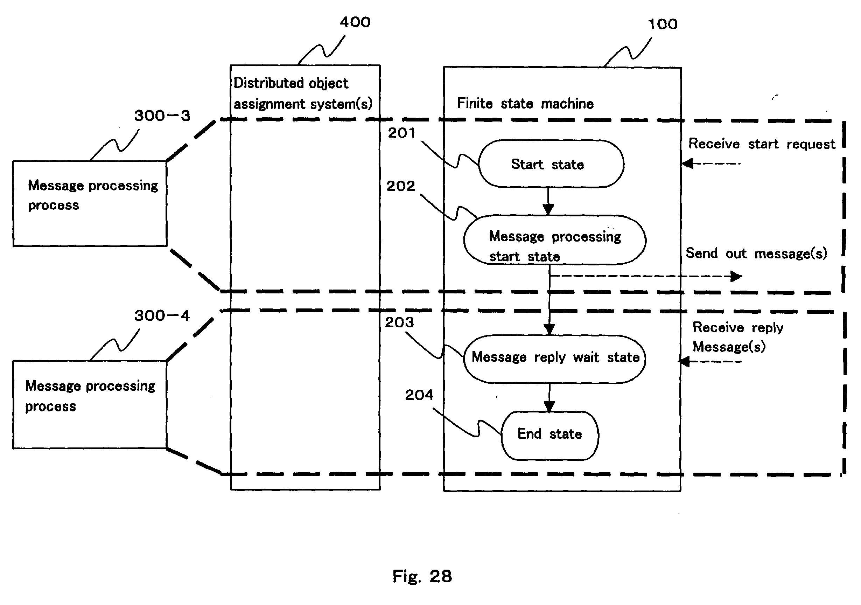

Next, third assignment relationship between the processing process (thread) and the finite state machine is that under a distributed object execution environment, message processing programs executed by different platforms on the network are assigned to the finite state machine via a distributed object assignment system(s). Fig. 28 shows the concept of this relationship. In this example, as shown in Fig. 28, a message processing process 300-3 is in charge of the execution of the start state 201 and the message processing start state 202 of the finite state machine 100 via a distributed object assignment system(s) 400, and a message processing process 300-4 is assigned to be in charge of the execution of the message reply wait state 203 and the end state 204 of the finite state machine 100 via a distributed object assignment system(s) 400.

### Embodiment 10

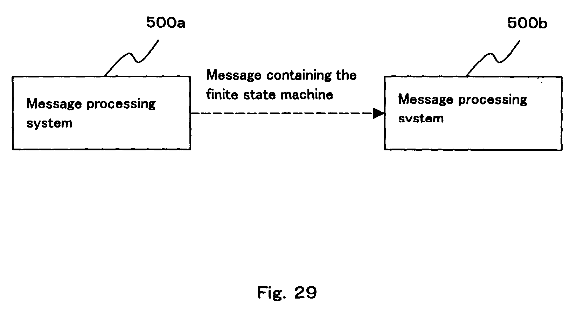

A message processing system of Embodiment 10 sends out a message(s) containing a finite state machine constructed in the message processing system to another message processing system (second message processing system). In the second message processing system, the finite state machine is reconstructed based on the message containing the finite state machine. Fig. 29 shows the concept of this relationship.

As shown in Fig. 29, a message processing process 500a sends out a message(s) containing a finite state machine to another message processing system 500b. For example, information on the service definition 41 (including message-finite state machine linkage information 42, control parameters 43 of the finite state machine and the parameter values thereof) and the finite state machine definition 51 described in Embodiment 3 are sent out. In the case where the message processing system 500b stores the service definition information or the finite state machine definition information or can dynamically obtain them from the resources on the network, only the control parameter value indicating the current state of the finite state machine in the message processing system 500a can be sent out.

The message processing system 500b that has received the message containing the finite state machine reconstructs the finite state machine in the message processing part based on the service definition information and the finite state machine definition information.

### Embodiment 11

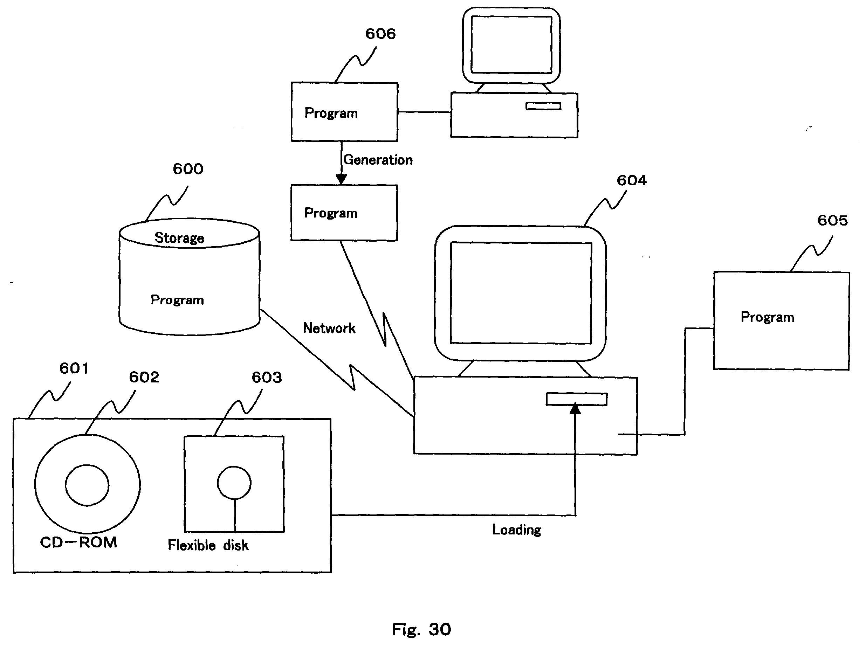

The message processing system according to the present invention can be configured by various computers by recording a program including the processing operations for realizing the configurations as described above on a computer-readable recording medium. As in an example shown in Fig. 30, the recording medium, on which the program provided with the processing operations realizing the message processing system according to the present invention is recorded, can be not only a portable recording medium 601 such as a CD-ROM 602 or a flexible disk 603, but also a recording medium 600 in a recording device on the network, a recording medium 605 such as a hard disk or a RAM in computers or a program 606 generated dynamically by a program on a computing system on the network. When executing the program, the program is loaded into a computer 604 and executed in its main memory.

The following items are additionally disclosed with respect to the above description.
(1) A finite state machine comprising a storing part for work and a message processing part as elements, which shifts to a message processing start state when a request to start is received in a start state; performs predetermined processing with the storing part for work in accordance with initially set values of the storing part for work; issues a request to transmit a generated message; shifts to a reply wait state for the message; stores a reply message in the storing part for work when a request to process the reply message is received in the reply wait state for the message; and shifts to an end state after performing predetermined processing when a predetermined condition is satisfied.
(2) The finite state machine according to (1), which shifts to the end state after performing predetermined processing when a request for time-out processing is received in the reply wait state.
(3) The finite state machine according to (1), which shifts to a message processing start state when a request to start with a message to be processed is received in a start state; selects a destination or destinations suitable for transfer of the message to issue a request to transmit the message; then shifts to a reply wait state; stores a reply message in the storing part for work when a request to process the reply message is received in the reply wait state to accumulate the reply messages; and shifts to an end state after performing processing for integrating the accumulated reply messages when a predetermined condition is satisfied.
(4) The finite state machine according to (3), wherein a destination suitable for transfer of a supplied message is selected by referring to a destination information storing part in which information on destinations has been previously stored.
(5) The finite state machine according to (3), wherein a destination suitable for transfer of a supplied message is selected based on designation in the message.
(6) The finite state machine according to (3), wherein a destination suitable for transfer of a supplied message is selected based on analysis of a content of the message.
(7) The finite state machine according to (3), wherein at a time of selecting a destination suitable for transfer of a supplied message, a content of the message is converted.
(8) The finite state machine according to (3), wherein at a time of shifting from the reply wait state to the end state, a message containing integrated replies is requested to be transmitted.
(9) The finite state machine according to (3), wherein a condition of transition from the reply wait state to the end state is to obtain all the reply messages that are awaited.
(10) The finite state machine according to (9), wherein a condition of transition from the reply wait state to the end state is to obtain all the reply messages that are awaited or that a total amount of contents of replies has reached a predetermined value.
(11) The finite state machine according to (3), wherein a condition of transition from the reply wait state to the end state is to receive at least one message that is not a failure notification of the reply messages that are awaited.
(12) The finite state machine according to (11), wherein a condition of transition from the reply wait state to the end state is to receive at least one message that is not a failure notification nor has an empty content of the reply messages that are awaited.
(13) The finite state machine according to (9) or (10), wherein all the accumulated replies are subjected to integration processing, when a predetermined condition is satisfied.
(14) The finite state machine according to (11) or (12), wherein
   when a predetermined condition is satisfied in the reply wait state, one reply that satisfies the predetermined condition of all the accumulated replies is subjected to integration processing.
(15) The finite state machine according to (3), wherein
   when a request to cancel processing is received in the reply wait state, the state shifts to the end state after performing predetermined processing.
(16) The finite state machine according to (15), which shifts to the end state without performing processing for integrating replies.
(17) The finite state machine according to (15), wherein
   when a request to cancel processing is received, the state shifts to the end state after performing processing for integrating replies in a same manner as the time-out processing according to (13) or (14).
(18) The finite state machine according to (2), which shifts to a message processing start state when a request to start with designation of an object whose state is to be checked is received in a start state; issues a request to transmit a message for checking the designated object; shifts to a reply wait state; checks whether a reply message reports that the state is normal or abnormal as reply message processing, when a request to process the reply message is received in the reply wait state; performs normal state reply processing when the reply message reports that the state is normal; performs abnormal state reply processing when the reply message reports that the state is abnormal; an then shifts to an end state; performs time-out processing when a request for time-out processing is received in the reply wait state; and then shifts to the message processing start state.
(19) The finite state machine according to (2), which shifts to a message processing start state when a request to start with designation of an object whose state is to be checked is received in a start state; issues a request to transmit a message for checking the designated object; shifts to a reply wait state; checks whether a reply reports that the state is normal or abnormal as reply message processing, when a request to process the reply message is received in the reply wait state; performs normal state reply processing when the reply reports that the state is normal; performs abnormal state reply processing when the reply reports that the state is abnormal; performs time-out processing when a request for time-out processing is received in the reply wait state; and then shifts to the end state.
(20) The finite state machine according to (18) or (19), wherein
   processing for canceling use of the designated object is performed as processing of the abnormal state reply processing and the time-out processing in the reply wait state, on the premise that the check object designated when issuing a request to start is treated as an object that can be used.
(21) The finite state machine according to (18) or (19), wherein
   processing for resuming use of the designated object is performed as the normal state reply processing in the reply wait state, on the premise that the check object designated when issuing a request to start is treated as an object that is cancelled.
(22) The finite state machine according to (20), which shifts to the start state of the finite state machine according to (21) after the time-out processing.
(23) The finite state machine according to (3), which shifts to a message processing start state when a request to start with a message to be processed is received in a start state; shifts to a first reply wait state after transmitting an inquiry message necessary for processing of the message; selects a destination or destinations suitable for transfer of the message to be processed to issue a request to transmit the message when a request to process a reply message is received in the first message reply wait state; then shifts to a second reply wait state; stores a reply message in the storing part for work when a request to process the reply message is received in the second reply wait state to accumulate the reply messages; and shifts to an end state after performing processing for integrating the accumulated reply messages when a predetermined condition is satisfied.
(24) The finite state machine according to (23), which makes an inquiry for information regarding a source of the message to be processed in the message processing start state, and performs processing in the first message reply wait state, based on the information regarding the source contained in a reply.
(25) The finite state machine according to (23), which makes an inquiry for information regarding a destination in the message processing start state, and performs processing in the first message reply wait state, based on the information regarding the destination contained in a reply.
(26) The finite state machine according to (7), which shifts to a message processing start state when a request to start with a message to be processed is received in the start state; shifts to a first reply wait state after transmitting an inquiry message necessary for processing for converting the message in a conversion information inquiry state inside the message processing start state; performs conversion processing using information from a reply when a request to process a reply message is received in the first message reply wait state; then shifts back to the conversion information inquiry state; repeats this transition until checking in conversion information inquiry state determines that conversion is completed; selects a destination or destinations suitable for transfer of the message to be processed to issue a request to transmit the message; then shifts to a second reply wait state; stores a reply message in the storing part for work when a request to process the reply message is received in the second reply wait state to accumulate the reply messages; and shifts to an end state after performing processing for integrating the accumulated reply messages when a predetermined condition is satisfied.
(27) The finite state machine according to (1), which shifts to a message processing start state when a request to start with designation of an object whose information to be collected is received in the start state in order to collect information on the destination required in the processing according to (3); issues a request to transmit a message for inquiry for information on the designated object; then shifts to a reply wait state; and shifts to an end state after performing processing for storing destination information as reply message processing when a request for reply message processing is received in the reply wait state.
(28) The finite state machine according to (1), which shifts to an inference processing state accompanied by external inquiry after performing inference start processing when a request to start is received in a start state; issues a request to transmit a message for inquiry when an external inquiry is generated during inference processing in the inference processing state inside the inference processing state accompanied by external inquiry; then shifts to a message reply wait state; stores information from a reply when a request for reply message processing is received in the message reply wait state to accumulate the information, shifts back to the inference processing state after processing for integrating the replies when a predetermined condition is satisfied to continue the inference processing based on the value of the integrated replies; repeats this transition until inference is completed; and shifts to an end state when inference is completed.
(29) A message processing system comprising the finite state machine according to (1) and a message linkage unit as elements, wherein
   at a same time of issuing a request to transmit a message in transition from a message processing start state to a message reply wait state, linkage between the message and the finite state machine is registered in the message linkage unit,
   when a reply message to the message is received, the message linkage unit is referred to and a request for reply message processing is issued to a corresponding finite state machine, and
   the linkage relationship between the message and the finite state machine is deleted when shifting from the message reply wait state to an end state.
(30) A message processing system comprising the finite state machine according to (2), a message linkage unit and a timer unit as elements, wherein
   at a same time of issuing a request to transmit a message in transition from a message processing start state to a message reply wait state, linkage between the message and the finite state machine is registered in the message linkage unit, and a request for time-out processing to the finite state machine at a predetermined time is registered in the timer unit,
   when a reply message to the message is received, the message linkage unit is referred to and a request for message processing is issued to a corresponding finite state machine, and a request for predetermined time-out processing is issued to the corresponding finite state machine at a predetermined time, and
   when shifting from the message reply wait state to an end state, the linkage relationship between the message and the finite state machine is deleted, and the time-out processing regarding the finite state machine is deleted.
(31) A message processing system comprising the finite state machine according to (15), a previous message linkage unit and a message linkage unit as elements, wherein
   when shifting from a message processing start state to a message reply wait state, linkage between a previous message and the finite state machine is registered in the previous message linkage unit, and at the same time of issuing a request to transmit a message, linkage between the message and the finite state machine is registered in the message linkage unit,
   when a reply message to the message is received, the message linkage unit is referred to and a request for reply message processing is issued to a corresponding finite state machine, and when a massage requesting to cancel processing of the previous message is received, the previous message linkage unit is referred to and a request to cancel processing is issued to a corresponding finite state machine, and
   when shifting from the message reply wait state to an end state, the linkage relationship between the message and the finite state machine is deleted, and the linkage relationship between the previous message and the finite state machine is deleted.
(32) A message processing system comprising a message processing part, a message a service definition storing part, and a finite state machine definition storing part as elements, wherein
   the service definition storing part stores a service definition having a message-finite state machine linkage part for assigning the finite state machine according to (1) to process a received message in accordance with a kind of the message and a parameter for controlling an operation of the finite state machine as elements,
   the finite state machine definition storing part stores definitions of a single or a plurality of kinds of finite state machine according to (1),
   the finite state machine is generated in the message processing part by capturing a finite state machine definition corresponding to the kind of the received message by the message-finite state machine linkage part in the service definition, and operated using the control parameter in the service definition,
      whereby message processing is performed unitedly as a service, using the single or plurality of kinds of finite state machine according to (1).
(33) The message processing system according to (32), further comprising a service execution environment managing part for managing a service execution environment as an element, and
   the service definition further comprising a service managing part for managing service by referring to or changing the service execution environment.
(34) The message processing system according to (32), wherein
   a plurality of service definitions can be stored in the service definition storing part, and
   each of the service definition comprises a service suitability determination part for determining which service is suitable for a received message.
(35) A message processing system using the finite state machine according to (1), wherein a single process or thread sequentially executes all the state transitions of a plurality of finite state machine, or a process or thread is assigned to be in charge of execution of all state transitions of each of the finite state machines.
(36) A message processing system using the finite state machine according to (1), wherein a plurality of processes or threads are in charge of execution of an arbitrary state transition of an arbitrary finite state machine.
(37) A message processing system using the finite state machine according to (1) under a distributed object execution environment, wherein message processing programs executed on different sites on the network share to execute state transitions of one finite state machine.
(38) A message processing system using the finite state machine according to (1), wherein
   a message containing the finite state machine itself whose state is specified is transmitted to another message processing system, the message processing system that has received the message proceeds with state transition and, if necessary, transmits the message containing the finite state machine itself whose state is specified to another message processing system.
(39) A message processing system using the finite state machine according to (8), wherein
   when shifting from the reply wait state to the end state, a reply length is reduced with respect to a content of the message that is requested to be transmitted to a predetermined destination.
(40) A message processing system using the finite state machine according to (8), wherein
   when shifting from the reply wait state to the end state, passing-round information attached to a supplied message to be processed is attached to the message that is requested to be transmitted to a predetermined destination.

## Claims

1. A message processing system, which captures a message running on a network where a plurality of information processing systems are connected, and executes processing corresponding to a content of the message, comprising:
a message-sending and receiving part having a message reception function of receiving a message transmitted via the network and a message transmission function of transmitting a message; and
a message processing part including a finite state machine, which is a part for executing a processing content corresponding to the message, for executing processing of the message as transition of finite state, regarding each stage of the processing of the message as a finite state,
wherein the finite state machine shifts its state:
a start state;
a message processing start state in which a request to start is received, a message to be transmitted to another message processing system indicating a content of the request is prepared and transmitted onto the network by the message-sending and receiving part;
a message reply wait state including event wait processing for waiting a reply from another message processing system to the message transmitted in the message processing start state, reply reception processing for receiving a reply message to the transmitted message by the message-sending and receiving part, and reply processing for executing processing in accordance with the reply message following a predetermined procedure; and
an end state in which the message processing is terminated after the message reply wait state is terminated.

2. The message processing system according to claim 1, further comprising a service definition storing part and a finite state machine definition storing part, wherein
the service definition storing part stores a service definition including message-finite state machine linkage information for assigning the finite state machine for executing processing corresponding to the message and a parameter for controlling an operation of the finite state machine as elements,
the finite state machine definition storing part stores a definition of the finite state machine,
the message processing part performs message processing by designating the finite state machine generated by the message-finite state machine linkage information in the service definition storing part, obtaining a finite state machine definition from the finite state machine definition storing part to generate the finite state machine, operating the finite state machine using the control parameter in the service definition.

3. The message processing system according to claim 2, wherein
the message processing part comprises a service execution environment managing part for managing a service execution environment, and
the service definition storing part further comprises a service managing part for managing service by referring to or changing the service execution environment in the service definition.

4. The message processing system according to claim 2, wherein
the service definition storing part stores a plurality of service definitions, and
the message processing part comprises a service suitability determination part for determining which service of the plurality of service definitions is suitable for the message.

5. The message processing system according to any one of claims 1 to 4,
wherein in the message processing start state of the finite state machine, the finite state machine selects a destination to which a message is transferred by at least one processing selected from the group consisting of:
processing for selecting a destination suitable for a supplied message to be transferred by referring to a destination information storing part in which destination information is stored;
processing for selecting a destination suitable for a supplied message to be transferred, based on designated destination described explicitly in the message supplied from a user; and
processing for selecting a destination suitable for a supplied message to be transferred, based on analysis on a content of the supplied message.

6. The message processing system according to any one of claims 1 to 4,
wherein the finite state machine shifts its state from the message reply wait state to the end state when at least one selected from the following conditions is satisfied:
a condition of obtaining all reply messages that are awaited;
a condition that a total amount of contents of replies to the message has reached a predetermined value;
a condition of receiving at least one reply that is not a failure notification as a reply to the message to which replies are awaited; and
a condition of receiving at least one reply that is not a failure notification nor has an empty content as a reply to the message to which replies are awaited.

7. The message processing system according to any one of claims 1 to 4, wherein
when the finite state machine shifts to a message processing start state in response to a request to start with designation of an object whose state is to be checked, the finite state machine shifts to a message reply wait state after issuing a request to transmit a message for checking the designated object;
when a reply message is received in the message reply wait state, the finite state machine checks whether the reply message reports that the state is normal or abnormal as the reply processing;
when the reply message reports that the state is normal, the finite state machine performs normal reply processing;
when the reply message reports that the state is abnormal, the finite state machine performs abnormal reply processing; and then
the finite state machine shifts to an end state.

8. The message processing system according to any one of claims 1 to 6, wherein the message reply wait state of the finite state machine includes a plurality of message reply wait states including at least a first message reply wait state and a message reply wait state,
the finite state machine receives the request to start, prepares a message to be transmitted to another message processing system indicating a content of the request, transmits the message onto the network by the message-sending and receiving part; and then shifts to the first message reply wait state,
when a reply message is received in the first message reply wait state, the finite state machine executes processing corresponding to the reply message following a processing program, prepares a second message, selects a destination suitable for the second message to be transmitted, transmits the second message, and then shifts to the second message reply wait state,
when a reply message is received in the second message reply wait state, the finite state machine shifts to reply processing for executing processing corresponding to the reply message following a processing program.

9. The message processing system according to any one of claims 1 to 4,
wherein the message processing part further comprises an inference processing part,
the message processing start state of the finite state machine includes an inference processing state by the inference processing part, and is a state in which state transition to the inference processing state occurs in response to a request to start, inference processing is executed, and a message with an inquiry to the outside resources is prepared, and the massage is transmitted onto the network by the message-sending and receiving part,
the message reply wait state is a state in which a reply to a message that was subjected to the inference processing is awaited to be transmitted from another message processing system,
the reply processing is to collect reply messages to the transmitted message that was subjected to the inference processing, to execute processing corresponding to the reply message following a processing program and to confirm that an inference processing return condition is satisfied,
in the reply message, when the inference processing return condition is not satisfied, transition to the inference processing state occurs again to repeat the message reply wait state and the reply processing, and
when the inference processing return condition is satisfied, transition to the end state occurs.

10. The message processing system according to any one of claims 1 to 4,
wherein under a distributed object execution environment, message processing programs executed on different platforms on the network execute state transition in unity of the finite state machine by assigning a divided portion of the state transition to each of the programs.

11. A finite state machine comprising a storing part for work and a message processing part as elements, which shifts to a message processing start state when a request to start is received in a start state; performs predetermined processing with the storing part for work in accordance with initially set values of the storing part for work; issues a request to transmit a generated message; shifts to a reply wait state for the message; stores a reply message in the storing part for work when a request to process the reply message is received in the reply wait state for the message; and shifts to an end state after performing predetermined processing when a predetermined condition is satisfied.

12. A message processing system comprising a message processing part, a message a service definition storing part, and a finite state machine definition storing part as elements, wherein
the service definition storing part stores a service definition having a message-finite state machine linkage part for assigning the finite state machine according to claim 11 to process a received message in accordance with a kind of the message and a parameter for controlling an operation of the finite state machine as elements,
the finite state machine definition storing part stores definitions of a single or a plurality of kinds of finite state machine according to claim 11,
the finite state machine is generated in the message processing part by capturing a finite state machine definition corresponding to the kind of the received message by the message-finite state machine linkage part in the service definition, and operated using the control parameter in the service definition,
whereby message processing is performed unitedly as a service, using the single or plurality of kinds of finite state machine according to claim 11.
